# EUROPÄISCHE PATENTSCHRIFT

(11) **EP 1 050 363 B1**
(45) Veröffentlichungstag und Bekanntmachung des Hinweises auf die Patenterteilung: **02.07.2003**
(21) Anmeldenummer: 00109208.9
(22) Anmeldetag: 28.04.2000
(51) Int. Cl.: B23Q 1/00

(54) **Kupplungssystem für den Anschluss maschinenseitiger Versorgungsleitungen für Medien aller Art inkl. elektrischer Leitungen zwischen Werkzeugmaschinen und daran angekoppeltem Werkstückträger**
Coupling system for the attachment of supply lines of all sorts of medium, including electrical cables, between machine tools and workpiece holders attached thereon
Système d'accouplement pour connecter les lignes d'alimentation de toutes sortes, y compris lignes électriques, entre une machine-outil et un support de pièces couplé à celle-ci

(30) Priorität: 04.05.1999 DE 19920291
(43) Veröffentlichungstag der Anmeldung: 08.11.2000
(73) Patentinhaber: Stark Spannsysteme GmbH, 6840 Götzis (AT)
(72) Erfinder: STARK, Emil, 6840 Götzis (AT)
(74) Vertreter: von Ahsen, Erwin-Detlef, Dipl.-Ing.

(56) Entgegenhaltungen:
- EP-A- 0 282 417
- EP-A- 0 285 557
- DE-A- 3 717 765
- US-A- 4 679 956
- US-A- 4 709 465
- US-A- 5 067 694
- US-A- 5 261 758
- US-A- 5 372 567

## Beschreibung

Die vorliegende Erfindung betrifft ein Kupplungssystem für den Anschluß maschinenseitiger Versorgungsleitungen für Medien aller Art zwischen Werkzeugmaschinen und daran angekoppeltem Werkstückträger nach dem Oberbegriff des Anspruchs 1, wie dies aus der EP0 282 417 bekannt ist.

In Werkzeugmaschinen angeordnete Schnellspannzylinder dienen zur raschen und einfachen Befestigung von Werkstückträgern auf Bearbeitungsmaschinen. Derartige Schnellspannzylinder können wahlweise in bestimmter Anordnung auf Werkzeugtischen angeordnet sein, um Werkstückträger aufzunehmen die an deren den Schnellspannzylindern zugeordneter Seite an entsprechenden Positionen mit passenden Einzugsnippel versehen sind, um in die Schnellspannzylinder eingeführt und mit diesen verriegelt zu werden. Solche Schnellspannzylinder sind nach dem Stand der Technik bekannt. Eine beispielhafte Ausführungsform eines solchen Schnellspannzylinders geht z. B. geht auf den selben Anmelder zurück, der unter der Anmeldenummer DE 198 419 28. 7 einen derartigen Schnellspannzylinder mit Ausblas- und Ausspritzeinrichtung angemeldet hat.

Im weiteren sind nach dem Stand der Technik Kupplungselemente zur Ölversorgung im Hydraulikbereich bekannt. So vertreibt z. B. die Fa. Röhmhild entsprechende Kupplungen, welche für die Versorgung von Hydrauliköl einsetzbar sind. Bei diesen Kupplungselementen handelt es sich um Vorrichtungen, welche zum einen große Abmaße aufweisen und zum anderen wenigstens aus einer von zwei zu verbindenden Einheiten hervorsteht, so daß Sie gegenüber deren Oberfläche deutlich absteht. Wenn nun ein solches Kupplungselement zur Versorgung von Hydrauliköl zwischen einer Bearbeitungsmaschine und einer darauf aufzuspannenden Werkzeugpalette bzw. Werstückträger eingesetzt wird, so steht entweder am Bearbeitungstisch der Werkzeugmaschine oder aber an dem darauf fest zu spannenden Werkstückträger ein Teil dieses Kupplungselementes von der betreffenden Oberfläche ab. In der Regel wird dieses abstehende Kupplungselement am Werkstückträger angeordnet, so daß dieses beim Aufsetzten des Werkstückträgers beim Bearbeitungstisch der Bearbeitungsmaschine an das zugeordnete Gegenstück ankoppeln kann. Beim Abheben des Werkstückträgers steht nun dieses Kupplungselement von der Unterseite des Werkstückträgers ab, und wenn der Werkstückträger an einer Lagerstelle abgelegt wird, liegt diese auf den vorstehenden Kupplungselementen auf. Da es sich bei den Werkstückträgern um relativ schwere Vorrichtungen handelt, werden diese Kupplungselemente mit hohem Belastungen konfrontiert. Dadurch besteht die Gefahr, daß die Kupplungselemente entweder durch ein Mißgeschick, durch unsachgemäße Behandlung oder im Laufe der Lebensdauer defekt werden oder zu Bruch gehen.

Da es sich bei diesen Kupplungselementen um sehr kompliziert aufgebaute Elemente handelt, welche entsprechende Bohrungen mit passenden Gewinden und Anschlußleitungen mit der Werkstückpalette erfordern kann es vorkommen, daß durch den Defekt eines solchen Kupplungselementes die entsprechende Aufnahmebohrung im Werkstückträger dadurch beschädigt wird und die kompliziert aufgebaute Aufnahmebohrung irreparabel beschädigt wird.

Durch einen solchen Schaden ist der Werkstückträger nicht mehr verwendbar da ein Nacharbeiten einer solchen Aufnahmebohrung zu Reparaturzwecken nicht möglich ist.

Ein weiterer Nachteil der bekannten Kupplungselemente besteht in der Größe der Elemente. Durch deren große Abmaße können sie nur an bestimmten Stellen im Werkstückträger angeordnet werden, wodurch die Versorgung des Werkstückträgers mit notwendigen Medien zur Bearbeitung der Werkstücke recht schwer zu realisieren ist. Solche Medien sind z. B. Hydrauliköl, Druckluft, Kühlmittel, Schmiermittel oder z. B. elektrische Kontakte. Durch die Größe der Abmaße der Kupplungselemente die bisher nach dem Stand der Technik bekannt sind, ist es im übrigen auch schwer realisierbar, mehrere gleiche oder auch unterschiedliche Medien zugleich zur Versorgung des Werkstückträgers anzubringen.

Der vorliegenden Erfindung liegt deshalb die Aufgabe zugrunde, ein Kupplungssystem für die Verbindung von Energie- und Signalleitungen für Medien aller Art inkl. elektrischer Leitungen zwischen Werkzeugmaschinen und daran angekoppeltem Werkstückträger zu realisieren, wobei das Kupplungssystem so ausgebildet sein soll, daß es automatisch zu- und auskoppelt, daß selbstschützend vor Beschädigung gesichert ist, daß auf dem Werkzeugtisch und auch auf der Grundfläche eines Schnellspannzylinders mehrere Kupplungseinheiten verteilt angeordnet sein können, wobei den einzelnen Kupplungselementen wahlweise unterschiedliche voneinander unabhängige Zuführungsbohrungen zugeordnet sind, durch welche unterschiedliche Medien zur gleichen Zeit zugeführt werden können, und wobei bei Abnahme des Werkstückträgers von der Bearbeitungsmaschine ein aufgebauter Betriebsdruck in den Versorgungsleitungen des Werkstückträgers im wesentlichen gleichbleibend aufrecht erhalten bleibt.

Wichtig bei der vorliegenden Erfindung ist also, daß neben einer Anordnung auf der Spannfläche des Werkzeugtisches auch auf der Grundfläche wenigstens eines Schnellspannzylinders verteilt mehrere Kupplungselemente angeordnet werden können, welche mit entsprechend korrespondierend angeordneten Elemente in einem darauf aufzuspannenden Werkstückträger nach Aufsetzen des Werkstückträgers auf den Bearbeitungstisch während des Verspannens automatisch einkuppeln.

Das Einkuppeln der Kupplungselemente zwischen der Bearbeitungsmaschine und dem Werkstückträger erfolgt beim anschließendem verriegeln des Nippels mit dem Schnellspannzylinder wobei die Kupplungselemente im Schnellspannzylinder durch die korrespondierenden Kupplungselemente im Werkstückträger, wie Ventile geöffnet werden, wodurch eine Versorgung der angeschlossenen Leitungen im Werkstückträger mit entsprechendem Medium ermöglicht wird. Die Versorgung der betreffenden Leitungen im Werkstückträger über diese Kupplungselemente kann sowohl im Leerlauf als auch unter Betriebsdruck erfolgen. Das Kupplungssystem ist dabei so aufgebaut, daß im wesentlichen keine Leckagen beim Aufspannen des Werkstückträgers auf den Schnellspannzylinder erfolgen, selbst wenn die Versorgungsleitungen mit Betriebsdruck beaufschlagt sind.

Beim Abnehmen des Werkstückträgers von der Bearbeitungsmaschine wird zuerst der Einzugsnippel entriegelt und dabei die Palette bzw. der Werkstückträger leicht angehoben. Durch diesen Anhebevorgang verschließen sich Ventile der beiden Kupplungselemente des Kupplungssystems so, daß sowohl das Kupplungselement im Werkstückträger als auch das Kupplungselement im Schnellspannzylinder die entsprechenden Leitungen nach außen hin abdichten.

Nach Abnehmen des Werkstückträgers von der Bearbeitungsmaschine kann der Werkstückträger mit den darauf aufgespannten Werkstücken auf eine andere Bearbeitungsmaschine aufgespannt werden, welche einen nachfolgenden Bearbeitungsvorgang für die darauf aufgespannten Werkstücke durchführt. An dieser Bearbeitungsmaschine ist es selbstverständlich notwendig, daß korrespondierende Schnellspannzylinder mit entsprechenden Kupplungselementen angeordnet sind, welche das selbe Kupplungssystem zur Versorgung der betreffenden Medien beinhaltet. Dadurch kann eine rasche Bearbeitung von Werkstücken ohne große Leerlauf- undloder Rüstzeit erfolgen.

Durch die technische Leere der vorliegenden Erfindung ist es nun erstmals möglich, zusätzliche Bearbeitungseinheiten an der Oberseite eines Werkstückträgers mit entsprechenden Medien zu versehen. So können z. B. Hydrauliköl für einen doppelwirkenden Zylinder durch zwei auf der Grundfläche des Schnellspannzylinders angeordnete Kupplungssysteme mit Hydrauliköl versorgt werden, wodurch ein spannen und ein entspannen von Werkstücken aufgrund hydraulischer Betätigung ermöglicht wird.

Ebenfalls ist es möglich, Bohremulsion, Schmiermittel, Druckluft oder auch Spezialgewindefett durch das entsprechende Kupplungssystem an das zu bearbeitende Werkstück zuzuführen, wodurch dieses durch entsprechende Steuerung der Versorgungsleitung mit dem betreffenden Medium versorgt werden kann. So ist es z. B. auch denkbar, daß ein Hydraulikmotor durch entsprechend angeordnete und mit Hydrauliköl versorgte Kupplungssysteme betrieben wird.

Ein wesentliches Merkmal der vorliegenden Erfindung besteht darin, daß das Kupplungssystem im wesentlichen selbstsichemd die einzelnen Kupplungselemente vor Beschädigung durch unsachgemäße Handhabung schützt und dadurch eine hohe Lebensdauer der Kupplungselemente bewirkt.

Ein weiterer Vorteil besteht darin, daß für den Fall einer im Grunde nicht zu erwartenden Beschädigung eines Kupplungselementes nicht wie bisher der Werkstückträger unbrauchbar wird, indem die betreffende Bohrung durch das Einwirken der großen Kräfte auf die entsprechenden Befestigungselemente in der Bohrung diese zerstört, sondern daß bei Defekt oder Bruch durch mechanische Einwirkung lediglich Teile des Betreffenden Kupplungselementes ausgetauscht werden müssen, oder im schlimmsten Fall das betreffende Kupplungselement als gesamte Einheit, wobei jedoch die Bohrung für die Aufnahme des betroffenen Kupplungselementes nicht durch Beschädigung gefährdet ist, da sich es hier um keine komplizierte Bohrung handelt, sondern lediglich um einfache zylindrische Bohrungen, welche dementsprechend im Werkstückträger und im Schnellspannzylinder angebracht sind, um das betreffende Kupplungselement aufzunehmen.

Wichtig bei dem im Werkstückträger eingearbeiteten Kupplungselement ist, daß dieses im nicht gespannten Zustand funktionsnotwendig aus der Oberfläche, welche beim Spannen des Werkstückträger dem Schnellspannzylinder zugeordnet ist, hervorsteht und die angeschlossenen Leitungen nach außen hin abdichtet. Durch Auflegen des Werkstückträgers auf eine glatte ebene Fläche kann es nun vorkommen, daß das Kupplungselement ähnlich wie beim derzeitigen Stand der Technik auf einer Fläche aufliegt, wodurch das Gewicht des Werkstückträgers auf das Kupplungselement drückt. Der entscheidende Vorteil der vorliegenden Erfindung gegenüber dem bisher bekannten Stand der Technik liegt nun darin, daß durch den entstehenden Druck auf das Kupplungselement dieses gegen eine im Kupplungselement angeordnete Feder nach innen gedrückt wird, bis das außen vorstehende Ende des Kupplungselementes plan mit der Unterseite des Werkstückträgers ist. Somit kann der Werkstückträger auf jede ebene Fläche abgelegt werden, ohne daß das betreffende Kupplungselement oder auch mehrere betreffende Kupplungselemente Gefahr laufen beschädigt zu werden. Zur Sicherheit ist ein noch tieferes Eindrücken dieses Kupplungselementes in den Werkstückträger gewährleistet.

Der eben beschriebene Federmechanismus besteht im Grunde aus zwei Federn, welche radial ineinander angeordnet sind. Jede Feder ist einem betreffenden Bauteil des Kupplungselementes zugeordnet. Das Kupplungselement welches im Werkstückträger angeordnet ist, besteht aus einem Gehäuse, welches in die oben beschriebene einfache zylindrische Bohrung eingefügt und darin befestigt wird. In diesem Gehäuse sind zwei Federn angeordnet, wobei die äußere Feder einem Ventilring und die innere Feder einer Dornhülse zugeordnet ist. Sowohl der Ventilring als auch die Dornhülse können also in das Gehäuse des Kupplungselementes gegen eine entsprechende Federkraft eingedrückt werden, bis diese einen betreffenden Anschlag erreichen. Die beiden Federkräfte sind dabei unterschiedlich ausgeführt, da dies aus funktionellen Gründen notwendig ist. So ist z. B. die Feder für den Ventilring mit einer deutlich geringeren Federkraft versehen, als die Feder für die Dornhülse. Zusätzlich steht der Ventilring geringfügig weiter aus dem Gehäuse hervor als die Dornhülse. Dadurch ergibt sich der Effekt, daß beim Andocken des Werkstückträgers auf den Werkzeugtisch bzw. den Schnellspannzylinder der Ventilring früher in das Gehäuse des Kupplungselementes im Werkstückträger eingedrückt wird als die Dornhülse, deren Federkraft zusätzlich bedeutend größer ist als die des Ventilringes.

Das entsprechende Gegenstück des Kupplungselementes im Schnellspannzylinder weist ebenfalls einen Venitldorn auf, der gegen eine Federkraft nach innen gedrückt werden kann. Diese Feder ist ebenfalls mit einer geringeren Federkraft ausgestattet, als die Federkraft der Dornhülse im Werkstückträger. Beim Aufeinandersetzen der beiden Kupplungselemente im Werkstückträger und im Schnellspannzylinder berühren sich als erstes ein im Ventilring stirnseitig angeordneter O-Ring und das Gehäuse des im Schnellspannzylinder angeordneten Kupplungselementes. Beim weiteren annähern des Werkstückträgers gegen den Schnellspannzylinder wird der O-Ring verformt und die Stirnseite des Ventilringes im Werkstückträger drückt sich gegen das Gehäuse des Kupplungselementes im Schnellspannzylinder. Dadurch wird eine Abdichtung des innenliegenden Raumes gegenüber der Außenseite des Kupplungssystemes erreicht. Nach abdichten des innenliegenden Raumes wird der Ventilring gegen die Federkraft nach innen in das Gehäuse des Kupplungselementes im Werkstückträger geschoben. Nach einem bestimmten Weg in Richtung dieser Bewegung setzt nun die Dornhülse mit der Stirnseite also ihrem Dorn auf die Stirnseite des Ventildornes auf. Da nun die Federkraft für den Ventildorn geringer ausgelegt ist als die Federkraft für die Dornhülse drückt die Dornhülse den Ventildorn in das Kupplungselement im Schnellspannzylinder gegen dessen Federkraft hinein. Dadurch öffnet sich die konische Abdichtung in der Innenseite des Kupplungselementes im Schnellspannzylinder und stellt eine Verbindung zur angeschlossenen Bohrung her, durch welche ein entsprechendes Medium durchgeführt werden kann. Nach dem Aufsetzen der Dornhülse des Kupplungselementes im Werkstückträger auf den Ventildorn im Kupplungselementes des Schnellspannzylinders wird auch der Ventilring weiter in das Gehäuse im Werkstückträger hineingepreßt und zwar so lange, bis die beiden Oberflächen des Werkstückträgers und dem Schnellspannzylinders plan aufeinander aufliegen. Durch das das weitere hineinschieben des Ventilringen in das Gehäuse des Kupplungselementes im Werkstückträgers wird ein ebenfalls schräg angefertigter Ventilsitz zwischen dem Ventilring und der Dornhülse geöffnet, so daß ein Durchgang zur anschließenden Bohrung im Werkstückträger geöffnet wird.

Um den Durchfluß des Mediums durch die Dornhülse zu ermöglichen ist diese mit einer Kreuzbohrung versehen, welche mit einer Längsbohrung im Inneren der Dornhülse verbunden ist, so daß das durchfließende Medium in das Innere des Ventilringes eindringt und über die Kreuzbohrung in die Längsbohrung der Dornhülse fließen kann. Die gegenüberliegende Seite der Dornhülse mündet hinter dem Boden des Gehäuses des Kupplungsteiles für den Werkstückträger, welcher seinerseits in eine entsprechend angeordnete Bohrung im Werkstückträger mündet.

Das andere Kupplungselement welches im Werkzeugträger oder im Schnellspannzylinder angeordnet sein kann ist grundsätzlich einfacher aufgebaut als das Kupplungselement im Werkstückträger. Das Kupplungselement im Werkzeugträger oder im Schnellspannzylinder besteht aus einem Gehäuse mit einem Ventildorn, welcher gegen eine Federkraft in das Innere des Gehäuses gedrückt werden kann. Zur Abdichtung des Ventildornes nach außen hin, ist dieser mit einer Schrägfläche versehen, in welche ein Einstich eingefügt ist, welcher einen O-Ring oder eine äquivalente Dichtung wie z. B. eine Lippendichtung oder eine Flachdichtung zur Abdichtung gegenüber einer im wesentlichen parallel verlaufenden Schrägfläche in der Innenseite des Gehäuses besitzt. Die beiden Schrägflächen sind dabei so geformt, daß sie von den Stirnseiten aus gesehen nch innen hin sich radial ausdehnen. Zur Abdichtung des Gehäuses gegenüber dem Schnellspannzylinder an der Seite der Zuführungsbohrung für das betreffende Medium ist das Gehäuse ebenfalls mit einem O-Ring versehen. Dieser wird bei der Montage des Gehäuses des Kupplungselementes entsprechend dichtend verformt.

Zur Gewährleistung eines entsprechenden Querschnittes in der Versorgungsleitung in das Kupplungselement hinein, welches im Schnellspannzylinder angeordnet ist ist der Ventildorn versorgungsseitig mit Längsschlitzen in seiner Mantelfläche versehen, welche als Durchbruch bis zur Innenbohrung hin ausgebildet sind.

Dadurch ergibt sich der Vorteil, daß das Kupplungselement nicht zwingend in axialer Flucht mit der Versorgungsleitung angeordnet werden muß, um eine entsprechende Zufuhr des Gewünschten Mediums zu ermöglichen. Ein möglicher Grund für einen Ersatz der Bohrung für die Zufuhr eine Mediums zur Durchleitung an den Werkstückträger kann darin bestehen, daß wie in einer weiteren Ausführungsform der vorliegenden Erfindung vorgesehen, zwischen dem Kupplungselement im Schnellspannzylinder und der Innenwand der für die Aufnahme vorgesehenen Bohrung ein Schlitz vorgesehen ist, welcher mit einem innenseitig im Schnellspannzylinderdeckel vorgesehenen Einstich verbunden ist, welcher mit Druckluft beaufschlagt wird, um Verunreinigungen von innen nach außen hin auszublasen. Dadurch ergibt sich die Möglichkeit, dieses Kupplungselement und dessen Umgebung von Bohrspähnen und Bohremulsion sowie anderen Verunreinigungen, die bei der Bearbeitung auf den Bohrtisch fallen können zu säubern. Ferner kann auch beim Abnehmen des Werkstückträgers mit vorheriger Beaufschlagung von Druckluft für den entsprechenden Versorgungsstrang bereits beim Abnehmen des Werkstückträgers Druckluft ausgeblasen werden, welche einen um so höheren Reinigungseffekt hat, je geringer der Abstand zwischen dem Werkstückträger und dem Schnellspannzylinder ist. So werden also sowohl das Kupplungselement im Schnellspannzylinder als auch das Kupplungselement im Werkstückträger durch die ausströmende Druckluft von etwaigen Verunreinigungen befreit.

Der selbe Vorgang bzw. der selbe Effekt ergibt sich natürlich auch beim Aufspannen des Werkstückträgers auf den Tisch. Je näher der Werkstückträger dem Schnellspannzylinder kommt, desto geringer wird der Querschnitt durch welche die Druckluft entströmen kann, und desto größer wird die Fließgeschwindigkeit der Druckluft und damit auch der Reinigungseffekt der durchgeführten Druckluft, wodurch evtl. am Kupplungselement am Werkstückträger haftende Verunreinigungen ausgeblasen werden können.

In einer weiteren Ausführungsform der vorliegenden Erfindung ist es vorgesehen, auch durch den Einzugnippel und den Schnellspannzylinder hindurch eine Verbindung zwischen dem Werkzeugtisch und dem Werkstückträger für die Durchführung von Medien oder evtl. elektrischen Leitungen zu realisieren. Dazu ist es ebenfalls vorgesehen, entsprechende Kupplungselemente im Einzugsnippel und im Schnellspannzylinder anzuordnen, welchen das selbe Funktionsprinzip zugrunde liegt.

Durch die Realisierung verschiedener Ausführungsformen der vorliegenden Erfindung ist es möglich, unterschiedliche Versorgungssysteme für alle möglichen Medien zu realisieren. So ist es z. B. denkbar mehrere voneinander unabhängige Hydraulikleitungen in Kombination mit Druckluftleitungen, welche ebenfalls voneinander unabhängig sein können durch den Schnellspannzylinder an den Werkstückträger anzuschließen.

Dieser Kombination können Versorgungsleitungen für Schmiermittel, Kühlmittel oder sonstige für die Bearbeitung notwendige Medien zugeführt werden. Die Kombination der Zufuhr der einzelnen Medien ist unabhängig voneinander realisierbar, so daß bei unterschiedlicher Aufgabenstellung wahlweise unterschiedliche Medien durch das betreffende Kupplungssystem durchgeführt werden können. So ist es z. B. möglich, einen aufgesetzten Hydraulikmotor durch entsprechende Ansteuerung über das Kupplungssystem zu betreiben, ebenfalls über eine weitere Hydraulikverbindung Werkstücke zu spannen bzw. zu lösen, Druckluft zum Ausblasen bei der Fertigung durchzuleiten oder auch Kühlmittel für den Bearbeitungsvorgang durch den Werkstückträger hin an die Bearbeitungsstelle zuzuführen. Entsprechende Anschlüsse für die Abnahme der betreffenden Medien sind an der Oberseite oder an einer anderen geeigneten Stelle des Werkstückträgers möglich.

Die vorliegende Erfindung wird nun im folgenden anhand mehrerer Ausführungsformen der beschreibenden Zeichnungen näher erläutert.

Es zeigen:
- Figur 1:: eine Schnittdarstellung durch einen Werkzeugträger auf einen Schnellspannzylinder in nicht verriegelndem Zustand und zwei darin angeordneten Kupplungssystemen, ebenfalls in Schnittdarstellung;
- Figur 2:: die Darstellung nach Figur 1 in verriegelndem Zustand;
- Figur 3:: einen Teilausschnitt aus Figur 1 im wesentlichen mit der Darstellung des Kupplungssystemes nach einem Ausführungsbeispiel der vorliegenden Erfindung im Schnitt A - A';
- Figur 4:: einen Teilausschnitt nach Figur 2 im wesentlichen mit der Darstellung des Kupplungssystemes nach einem Ausführungsbeispiel der vorliegenden Erfindung im Schnitt A-A';

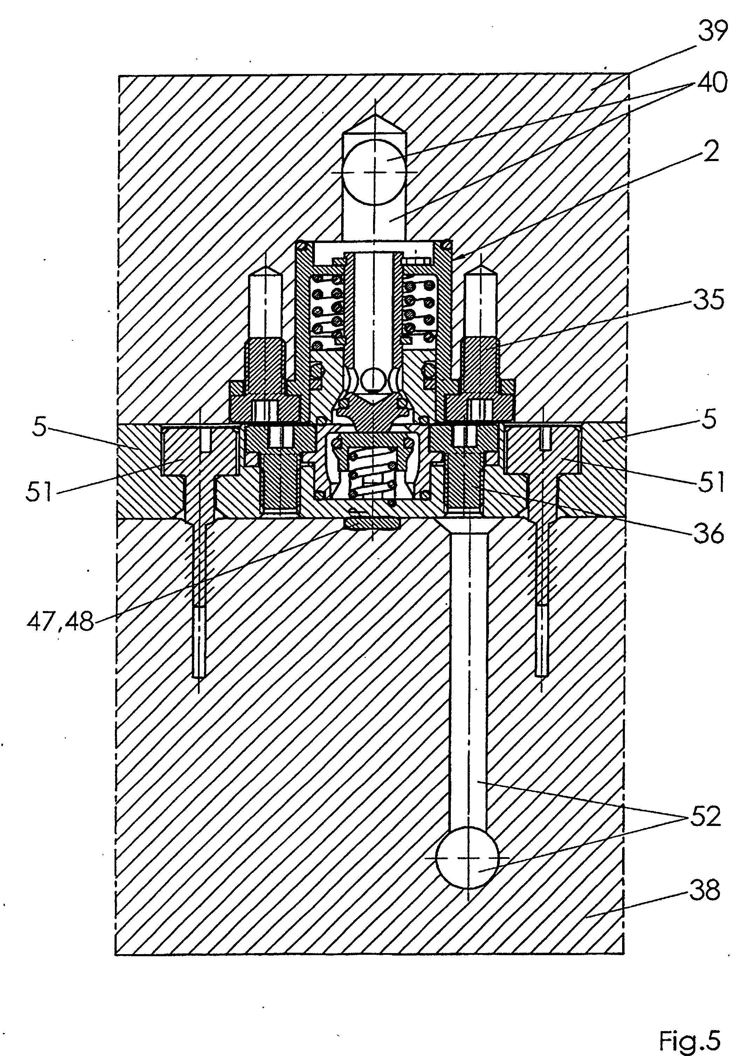

- Figur 5:: ebenfalls einen Schnitt durch das erfindungsgemäße Kupplungssystem im Schnitt B-B', nach der Darstellung in Figur 4;
- Figur 6:: eine Schnittdarstellung durch das Kupplungssystem im Schnitt B, B' nach Figur 5 im nicht eingebautem, jedoch geöffneten Zustand
- Figur 7 und 8:: eine Schnittdarstellung der beiden Kupplungselemente des Kupplungssystemes im Schnitt A-A' im geschlossenen Zustand;
- Figur 9 und 10:: eine Schnittdarstellung der beiden Kupplungselemente des Kupplungssystemes im Schnitt B-B' in geöffnetem Zustand;
- Figur 11:: eine Draufsicht auf einen Ausschnitt eines Werkstückträgers mit eingebautem Nippel und vier eingebauten Werkzeugträgerkupplungselementen des Kupplungssystemes;
- Figur 12:: eine Draufsicht auf einen Schnellspannzylinder/Schnellspannzylinderdeckel mit zentraler Aufnehmung für den Einziehnippel und vier Schnellspannzylinderkupplungselemente des Kupplungssystems sowie acht weiteren Befestigungsschrauben für den Schnellspannzylinderdeckel;
- Figur 13:: eine Schnittdarstellung eines Einziehnippels mit einem darin eingebautem Kupplungselement
- Figur 14:: eine ausschnittsweise Schnittdarstellung eines Schnellspannzylinders mit darin eingebautem Kupplungselement.
- Figur 15 und 16:: eine Schnittdarstellung eines Kupplungssystemes für elektrische Verbindungen.

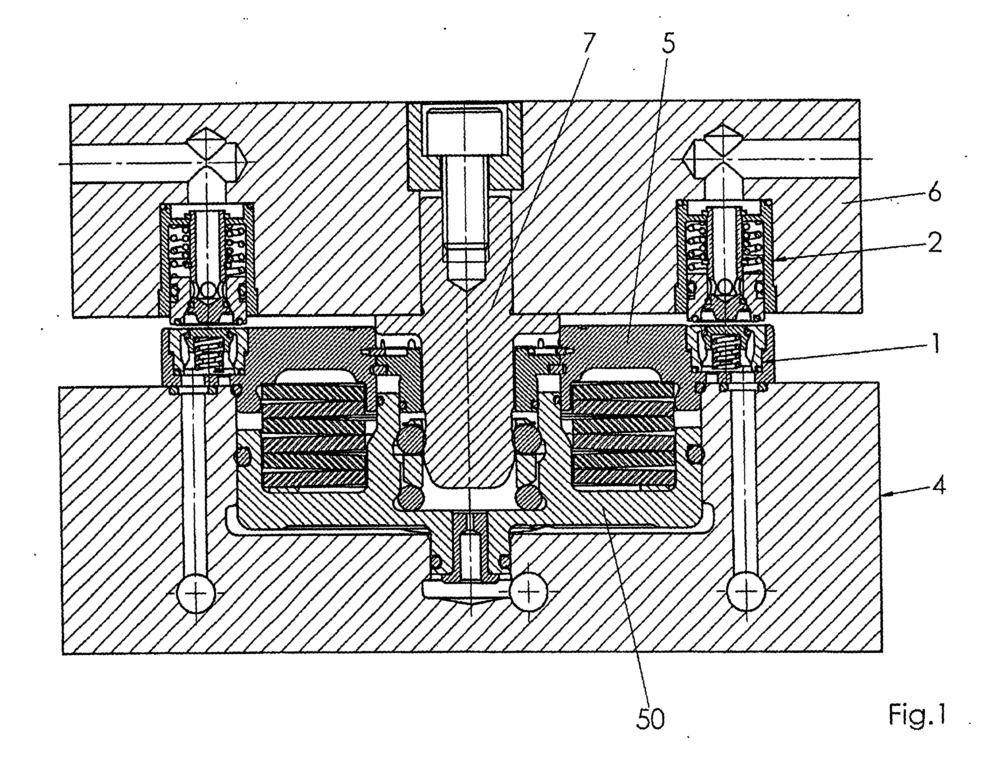

Figur 1 zeigt eine Darstellung im Schnitt A-A' durch einen Werkstückträger 6 mit eingebautem Einziehnippel 7, zwei eingebauten, erfindungsgemäßen Kupplungselementen 2, welche für den Einbau in den Werkstückträger 6 vorgesehen sind sowie einen unterhalb des Werkstückträgers 6 angeordneten Schnellspannzylinder in welchem der Einziehnippel 7 eingeführt ist und zwei im Deckel 5 des Schnellspannzylinders 4 angeordnete Kupplungselemente 1, die als Komplementärteile zu den Kupplungselementen 2 im Werkstückträger funktionieren. Im Schnellspannzylinder 4 ist ein Kolben 50 angeordnet, der für die Verriegelung des Einziehnippels vorgesehen ist. In der Darstellung in Figur 1 ist der Werkstückträger 6 auf den Schnellspannzylinder 4 aufgesetzt, wobei die beiden Kupplungselemente 2 noch beabstandet zu den komplementären Kupplungselementen 1 des erfindungsgemäßen Kupplungssystemes angeordnet sind. Bei entlasten des Kolbens 50 vom Hydrauliköldruck, wird der Schnellspannzylinder in bekannter Weise durch die Spannfedern 43 gespannt und der Werkstückträger wird mit seiner dem Schnellspannzylinder zugeordneten Fläche gegen diesen gezogen, bis beide plan aufeinander aufliegen. Durch dieses Zusammenziehen der beiden Einheiten werden die Kupplungselemente 2 und 1 des erfindungsgemäßen Kupplungssysteme gegeneinander gepreßt. Dabei werden die aus der Unterseite des Werkstückträgers 6 hervorstehenden Bauteile der Kupplungselemente 2 auf die Stirnseite des im Deckel des Schnellspannzylinder angeordneten Kupplungselementes 1 gedrückt. Die erste Berührung zwischen dem Kupplungselement 2 und dem Kupplungselement 1 erfolgt durch den O-Ring 11, welcher stirnseitig im Ventilring 10 angeordnet ist, mit dem Gehäuse 24 des Kupplungsteiles des Werkstückträgers. Dieser O-Ring legt sich dichtend in die Stirnseite des Gehäuses 24 und bildet somit einen nach außen hin abgedichteten Raum aus. Beim weiteren annähern des Werkstückträgers 6 an den Schnellspannzylinder 4 setzt die Stirnseite des Ventilringes 10 auf der Stirnseite des komplementären Gehäuses 24 des erfindungsgemäßen Kupplungssystemes auf und wird beim weiteren Zusammenfügen des Werkstückträgers 6 mit dem Schnellspannzylinder 4 gegen eine Federkraft der Ventilringfeder 17 in das Gehäuse 8 des Werkstückträgers 4 gedrückt. Der Verschiebeweg des Ventilringes 10 ist dabei so ausgelegt, daß dieser beim planen Aufliegen noch ausreichend Spiel für die Feder im Gehäuse 8 aufweist. Sobald der Werkstückträger 6 plan auf dem Deckel 5 des Schnellspannzylinder 4 aufliegt ist auch die Stirnseite des Ventilringes 10 plan mit der Unterseite des Werkstückträgers 6 ausgerichtet

Während dieses Vorganges des Zusammenfügens des Werkstückträgers 6 mit dem Schnellspannzylinder 4 wird also der Ventilring 10 axial in das Gehäuse 8 des Werkstückträgers gegen die Federkraft der Ventilringfeder nach innen geschoben. Dabei wird eine konische Abdichtung zwischen dem Ventilring 10 und der Domhülse 9, welche ihre axiale Position beibehält geöffnet. Durch diesen Mechanismus ist eine Ventilfunktion realisiert, welche zwischen der konischen Innenfläche in der Bohrung des Ventilringes 10 und der entsprechend konisch in etwa parallel angeordneten Fläche im Außenumfang des Kopfes des Dornhülse 9 mit dem darin angeordneten O-Ring 12 ausgebildet ist.

Die Dornhülse 9 ist ihrerseits ebenfalls federnd axial verschiebbar, wobei die der Dornhülse zugeordnete Dornhülsenfeder 18 eine wesentlich höhere Federkraft als die Ventilringfeder 17 aufweist. Beim Zusammenfügen des Werkstückträgers 6 mit dem Schnellspannzylinder 4 wird also einerseits der Ventilring 10 in das Gehäuse 8 des Werkstückträgers eingedrückt und andererseits die Dornhülse 9 mit ihrer Stirnseite gegen die Stirnseite des Ventildornes 25 im Kupplungselement 2 des Schnellspannzylinders gedrückt, wobei der Ventildorn 25 ebenfalls durch eine Feder 28 axial verschiebbar angeordnet ist, und die Federkraft der Feder 28 geringer als die Federkraft der Dornhülsenfeder 18 ausgelegt ist, so daß die Dornhülse 9 aufgrund des höheren Federdruckes der Dornhülsenfeder 18 den Ventildorn 25 gegen die Federkraft der Feder 28 in das Gehäuse 24 des Kupplungsteiles 1 im Schnellspannzylinder eingedrückt wird. Durch das Eindrücken des Ventildornes 25 wird eine axiale Schrägfläche, welche mit einem O-Ring 31 versehen ist, von einer komplementären Schrägfläche in der Innenbohrung des Gehäuses 24 im Kupplungsteil 1 des Schnellspannzylinders 4 wegbewegt, wodurch sich ebenfalls eine Ventilfunktion wie bereits beim Kupplungsteil 2 für den Werkstückträger beschrieben ergibt.

Es wird also beim Verspannen des Werkstückträgers 6 mit dem Schnellspannzylinder 4 die Dornhülse 9 des Kupplungsteiles 2 vom Werkstückträger gegen den Ventildorn 25 im Gehäuse des Kupplungsteiles 24 im Deckel des Schnellspannzylinders gedrückt, wobei die Dornhülse 9 den Ventildorn 25 in das Gehäuse 24 hineindrückt und die dichtende Ventilfunktion zwischen den Schrägflächen des Ventildornes 25 und der Innenseite in der Bohrung des Gehäuses 24 öffnet. Dadurch wird eine leitende Verbindung zwischen Versorgungsbohrung im Schnellspannzylinder und den abgehenden Bohrung im Werkstückträger 6 durch das erfindungsgemäße Kupplungssystem hergestellt. Durch diese Verbindung kann nun wahlweise jedes mögliche Medium hindurchgeführt werden, so daß an entsprechenden Stellen am Werkstückträger Anschlüsse an die betreffenden Versorgungsleitungen angeordnet werden können, welche das benötigte Medium an der Bearbeitungsseite des Werkstückträgers an dem die Werkstücke angeordnet sind zur Verfügung stehen.

So können z. B. Hydrauliköl zum Spannen und Entspannen von Werkstücken über die erfindungsgemäßen Kupplungssysteme an der Bearbeitungsseite des Werkstückträgers zur Verfügung gestellt werden. Ebenfalls können Schmiermittel, Kühlmittel, Spezialfett oder andere zur Bearbeitung von Werkstücken notwendige Medien durch das Schnellspannsystem im Schnellspannzylinder hindurch in den Werkstückträger hinein durchgeleitet werden und an der benötigten Stelle zur Verfügung gestellt werden.

Die Anordnung des erfindungsgemäßen Kupplungssystemes erfolgt dabei im wesentlichen über die Oberfläche des Schnellspannzylinders verteilt, wobei diese Anordnung eine entsprechend komplementäre Anordnung in der komplementären Kupplungselemente 2 im Werkstückträger erfordert, um die Durchführungen zu realisieren. Vorteilhafterweise ist die Anordnung der Kupplungsteile im Schnellspannzylinder zwischen den Befestigungsschrauben für den Deckel 5 des Schnellspannzylinders am Umfang entlang realisiert. Diese Anordnung ist zwar nicht zwingend, hat sich jedoch auf Grund der Platzverhältnisse als vorteilhaft herausgestellt. So können auf geringstem Raum unterschiedliche Medien über voneinander getrennt versorgte Kupplungssysteme von den betreffenden Versorgungsleitungen durch den Schnellspannzylinder hindurch in den Werkstückträger durch einfaches Ankoppeln des Werkstückträger an den Schnellspannzylinder übertragen werden. Es bedarf also keinerlei zusätzlicher Schraubverbindungen oder anderer Verbindungen, welche Leitungen für die benötigten Medien erfordern. Ein einfaches fixieren des Werkstückträgers 6 auf dem Bearbeitungstisch durch den Schnellspannzylinder 4 stellt beim Spannen des Werkstückträgers automatisch die Verbindung zwischen den maschinenseitigen Versorgungsleitungen und den Verteilungsbohrungen im Werkstückträger her an deren Enden entsprechende Abnahmestellen angeordnet sind.

Diese Abnahmestellen können z. B. Leitungen zur Versorgung eines Hydraulikmotors, Leitungen für die Zuführung von Bohremulsion an das zu bearbeitende Werkstück, Schmiermittel oder Spezialfett zum Gewindeschneiden sowie Versorgungsleitungen wie z. B. doppelwirkende Zylinder zum Spannen von Werkstücken und dergleichen mehr sein. Die Anwendungsbereiche für die Versorgung von Medien zur Werkstückberarbeitung erstrecken sich über den gesamten Bereich nach dem bekannten Stand der Technik. Der Vorteil der vorliegenden Erfindung liegt darin, die Versorgung der entsprechenden Medien anhand eines Schnellspannsystemes zu realisieren, welches keinerlei zusätzlich anzukoppelnde Versorgungsleitungen zwischen den werkstattseitigen Versorgungseinheiten und der Bearbeitungsseite des Werkstückträgers erfordern.

Die Werkstücke können auf dem Werkstückträger gespannt werden und durch die dichtend angeordneten Kupplungsteile zwei im Werkstückträger 6 fest gespannt auf eine Bearbeitungsmaschine aufgespannt werden und von dieser wieder entnommen werden, und entweder auf eine weitere Bearbeitungsmaschine aufgespannt oder aber an entsprechend Stellen zwischengelagert werden, ohne daß die festgespannten Werkstücke neu gespannt werden müssen.

Ein weiterer Vorteil besteht darin, daß die Koordinatensysteme der Werkzeugmaschinen zueinander abgestimmt sind und so die Werkstücke den kompletten Bearbeitungsvorgang auf einem Werkstückträger durchlaufen können, wobei sie von unterschiedlichen Bearbeitungsmaschinen bearbeitet werden. Die dazu notwendigen Medien werden eben erfindungsgemäß durch das vorliegende Kupplungssystem zur Verfügung gestellt und stehen sofort nach dem Verspannen des Werkstückträgers 6 mit dem Schnellspannzylinder 4 zur Verfügung. Dadurch ergeben sich wesentlich kürzere Stillstands- und/oder Rüstzeiten bei der Bearbeitung von Werkstücken, wodurch eine bessere Auslastung der Maschinenzeiten erreicht wird.

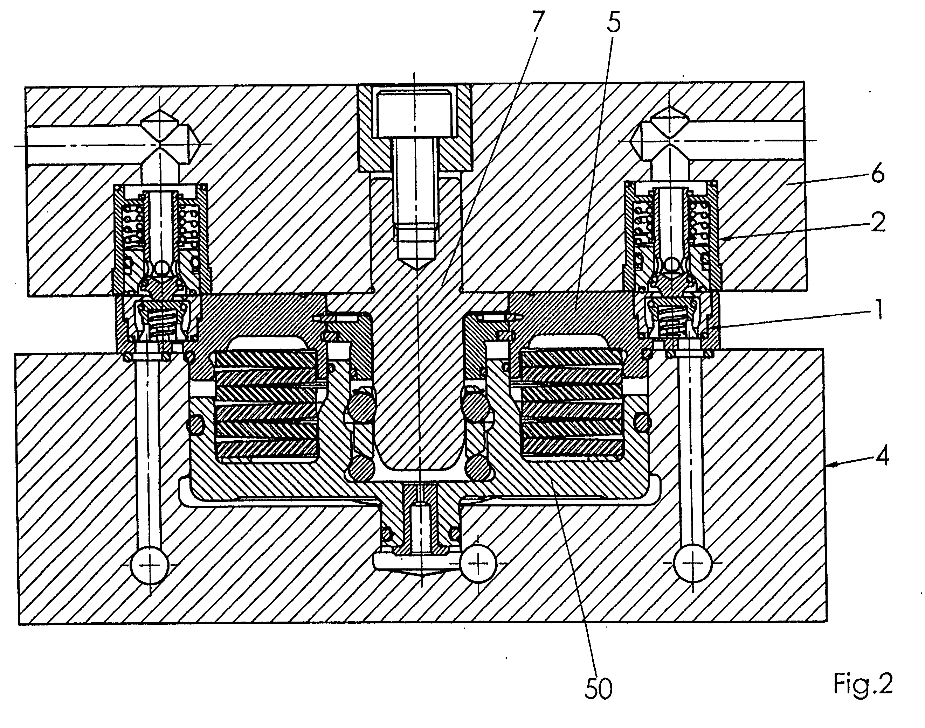

In Figur 2 ist nun ein mit einem Schnellspannzylinder verspannter Werkstückträger 6 dargestellt, welcher in der Mitte einen Einziehnippel 7 aufweist, der in den Kolben des Schnellspannzylinders eingeführt und vom Schnellspannzylinder 4 verspannt ist. Links und rechts der Verspanneinheit sind wie in Figur 1 dargestellt zwei Kupplungssysteme zur Versorgung von benötigten Medien in Durchlaßstellung dargestellt. Die Durchlaßstellung ergibt aus dem bereits in Figur 1 ausführlich erklärtem Mechanismus.

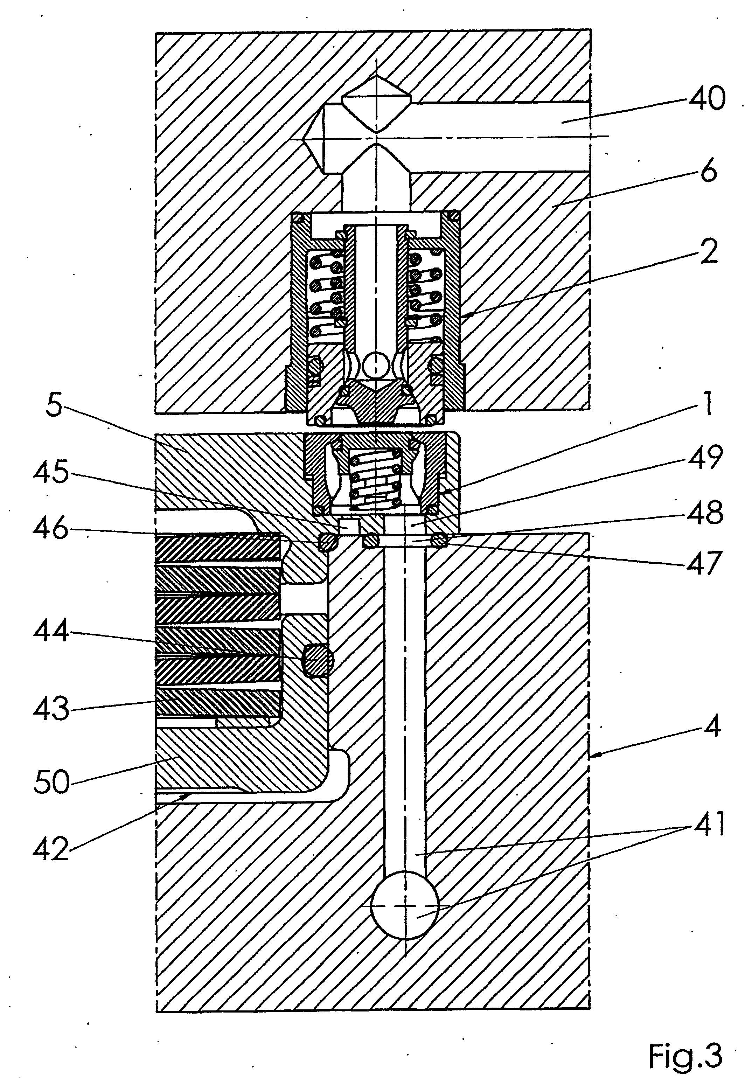

Figur 3 zeigt eine ausschnittweise Darstellung einer Schnittdarstellung durch einen Schnitt A-A' durch ein erfindungsgemäßes Kupplungssystem, welches mit seinem Kupplungsteil 1 im Schnellspannzylinder und mit seinem Kupplungsteil 2 im Werkstückträger angeordnet ist. An das Kupplungsteil 2 im Werkstückträger schließt eine Kreuzbohrung 40 an, welche das durchgeleitete Medium an die entsprechende Stelle im Werkzeugträger 6 weiterleitet an der es zur entsprechenden Verwendung entnommen wird. Das Kupplungsteil 1 im Deckel 5 des Schnellspannzylinders 4 wird von seiner Unterseite her durch eine Zuführungsbohrung 41 mit einem entsprechenden Medium versorgt, welches in der Darstellung nach Figur 3 bis in den Innenraum des Kupplungsteiles 1 im Schnellspannzylinder hineinfließen kann. Dadurch daß der Werkstückträger 6 noch nicht fest an den Schnellspannzylinder 4 angekoppelt ist, sind die beiden Kupplungselemente des erfindungsgemäßen Kupplungssystemes noch nicht miteinander verbunden bzw. angekoppelt, so daß beide Kupplungselemente 1 und 2 für sich geschlossen sind und ein nach innen hin abgedichtetes System darstellen. Im linken unteren Bereich ist der Kolben 50 des Schnellspannzylinders dargestellt in welchem die Spannfeder 43 angeordnet ist. Die O-Ringe 44 und 46 sind ebenfalls Elemente des Kolbens des Schnellspannzylinders. Der Einstich 45 dient zur Versorgung von Druckluft, welche für eine spezielle Ausführungsform der vorliegenden Erfindung vorgesehen ist, um Druckluft durch einen das Kupplungsteil 1 umgebenden Spalt hindurch zu lassen, um ein Ausblasen aus dem Deckel 5 des Schnellspannzylinders 4 zu ermöglichen. Im weiteren sind eine Öffnungsbohrung 48 und ein O-Ring 47 im Schnellspannzylinder angeordnet, welche die dichtende Verbindung zwischen dem Gehäuse des Schnellspannzylinders 4 und dem Deckel 5 des Schnellspannzylinders gewährleisten.

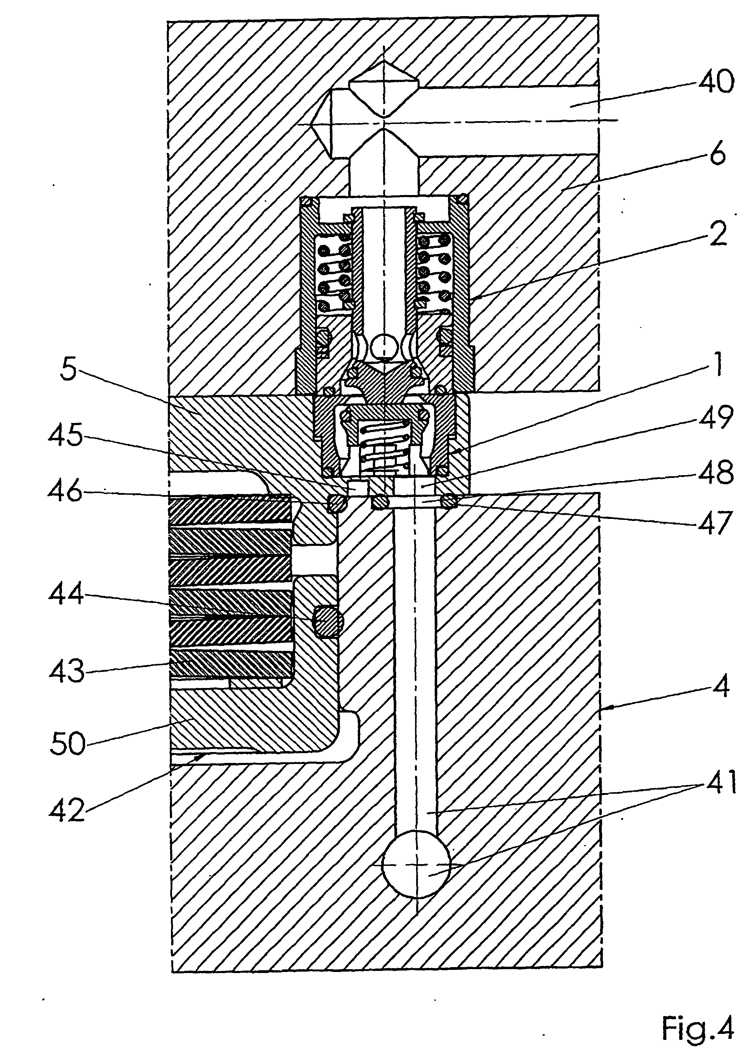

In Figur 4 ist eine entsprechende Darstellung zu Figur 3 gezeigt, welche den Werkzeugträger 6 mit dem Schnellspannzylinder 4 verspannt darstellt. Die Numerierung der einzelnen Elemente entspricht im wesentlichen der Numerierung in Figur 3. In dieser Darstellung ist zu erkennen, daß im Gegensatz zur Darstellung in Figur 3 das erfindungsgemäße Kupplungssystem geöffnet ist, wobei die dichtenden Schrägflächen der beiden Kupplungselemente von dem im Ruhezustand durch Federkraft angepreßten Schrägflächen beabstandet sind.

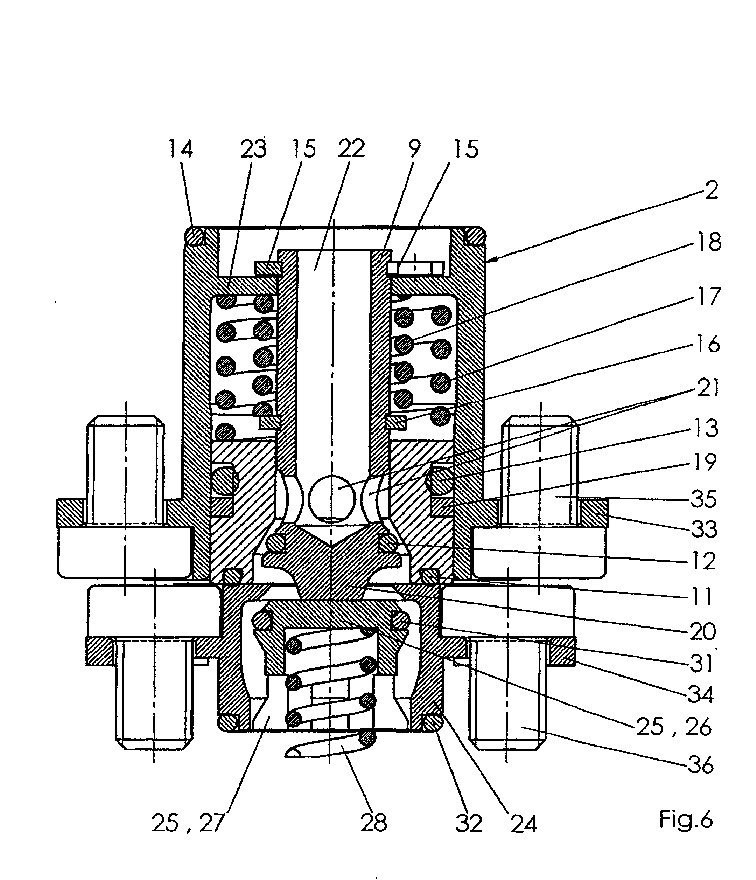

Figur 6 zeigt nun ein erfindungsgemäßes Kupplungssystem in zusammengefügtem Zustand, so daß die Dornhülse 9 den Ventildorn 25 axial gegen die Federkraft der Feder 28 in das Gehäuse 24 des Kupplungsteiles 1 eindrückt. Dadurch wird die Stirnseite des Ventildornes 25 angrenzende Schrägfläche mit dem darin angeordneten O-Ring 31 von korrespondierenden an die Stirnseite des Gehäuses 24 nach innen hin angrenzende Schrägfläche beabstandet. Dadurch ergibt sich ein ringförmiger Durchflußkanal, dessen Konturen die Schrägflächen des Gehäuses 24 und des Ventildornes 25 darstellen. Der Ventildorn 25 weist eine innenseitige zylindrische Bohrung auf, in dessen Raum die Feder 28 angeordnet ist, welche dafür sorgt, daß die oben beschriebenen Schrägflächen gegeneinander gepreßt werden und dadurch einen dichtenden Ventilsitz ausbilden. Der Ventildorn weist an dem der Stirnseite gegenüberliegenden Bereich in seiner Mantelfläche Schlitze auf, als Durchbrüche zur zentralen zylindrischen Bohrung hindurch reichen. so daß eine Verbindung zwischen der zentralen Bohrung im Ventildorn 25 und dem Innenraum des Gehäuses 24 gewährleistet ist.

Ein O-Ring 32 dichtet das Gehäuse 24 gegenüber dem Deckel 5 des Schnellspannzylinders 4 ab, so daß das durchzuführende Medium nicht an dieser Stoßstelle nicht nach außen dringen kann. In einer speziellen Ausführungsform der vorliegenden Erfindung ist es vorgesehen, seitlich um das Gehäuse 24 herum zwischen dem Gehäuse und dem Deckel des Schnellspannzylinders einen Schlitz auszubilden, welche mit einem im Deckel eingearbeitenden Einstich verbunden ist, durch welchen Druckluft um den Umfang des Deckels verteilt, wodurch an den betreffenden Stellen Druckluft seitlich an dem Gehäuse ausströmen kann und eventuell angeordnete Verunreinigungen entfernt.

Weiters ist in der Darstellung nach Figur 6 eine Befestigungslasche 34 zu erkennen, in der eine Schraube 36 angeordnet ist, durch welche das Gehäuse 24 mit dem Deckel 5 des Schnellspannzylinders 4 verschraubt wird.

Im Kupplungsteil 2 ist der Ventilring 10 gegen die Federkraft der Ventilringfeder 17 in das Gehäuse 8 des Kupplungsteiles 1 im Werkstückträger nach innen gedrückt so daß die Stirnseite des Ventilringes 10 plan auf der Stirnseite des Gehäuses 24 im Kupplungsteil im Schnellspannzylinder aufliegt. Die Abdichtung zwischen beiden Gehäuseteilen nach außen hin erfolgt durch den O-Ring 11, welcher als erster die Stirnseite des Gehäuses 24 beim Zusammenfügen berührt.

Beim weiteren Zusammenfügen des Werkstückträgers und des Schnellspannzylinders wird die Dornhülse 9 mit ihrer Stirnseite gegen die Stirnseite des Ventildornes 25 gedrückt, wodurch sich eine Kraftkomponente von der Federkraft der Feder 28 gegen die Dornhülsenfeder 18 aufbaut. Da die Dornhülsenfeder 18 jedoch eine deutlich höhere Federkraft aufweist als die Feder 28 wird die Dornhülsenfeder 18 nicht zusammengepreßt. Dadurch bleibt die Dornhülse in ihrer axialen Position unverändert und drückt den Ventildorn 25 gegen die Federkraft der Feder 28 in das Gehäuse 24 in das Kupplungsteiles für den Schnellspannzylinder.

Die Dichtfunktion für das Kupplungsteil für den Werkstückträger ist ähnlich wie die Dichtfunktion im Kupplungsteil 1 für den Schnellspannzylinder. Es sind hier ebenfalls Schrägflächen ausgebildet, welche einerseits in der Innenbohrung des Ventilringes 10 und andererseits in der Außenkontur der Dornhülse angeordnet sind, wobei die Schrägfläche der Dornhülse 9 ein O-Ring 12 zur Abdichtung der beiden Flächen gegeneinander angeordnet ist. Durch das Eindrücken des Ventilringes 10 beim Zusammenfügen des Werkstückträgers mit dem Schnellspannzylinder werden die beiden Schrägflächen des Ventilringes 10 und der Dornhülse 9 voneinander getrennt, so daß ebenfalls ein ringförmiger Kanal wie beim Kupplungsteil 1 entsteht. Im Anschluß an diesen Kanal ist in der Dornhülse 9 eine durchgängige Kreuzbohrung angeordnet, welche in einer Axialbohrung 22, die zentral in der Dornhülse hinter dem Dorn 20 angeordnet ist und an dessen Ende mündet. Nach dem Öffnen des Durchgangskanals des Ventilsitzes ergibt sich also ein Durchgang, welcher durch die geöffnete Ringöffnung zwischen den beiden Schrägflächen des Ventilringes 10 und der Dornhülse 9 beginnend über die Kreuzbohrungen 21 durch Axialbohrung 22 an dem der Dorn 20 gegenüberliegenden Ende der Dornhülse mündet. Diese Mündung der Dornhülse erstreckt in einem Raum des Gehäuses 8 im Werkstückträger, welcher an eine abführende Leitung im eingebautem Zustand anschließt. Zur Abdichtung des Gehäuses 8 gegenüber dem Werkstückträger ist das Gehäuse an seiner Bodenseite mit einem O-Ring 14 versehen, welcher nach dem Einbau des Gehäuses dieses mit dem Werkstückträger dichtend verbindet, so daß die abführende Leitung im Werkstückträger nach außen hin abgedichtet ist. Das Gehäuse 8 des Kupplungsteiles für den Werkstückträger weist einen innenseitigen Gehäusebogen 23 auf, welcher zur Abstützung der beiden Federn 17 und 18 auf der einen Seite und zur Abstützung des Segerringes 16, welcher zur Fixierung der Dornhülse 9 dient angeordnet ist. In der Außenkontur der Dornhülse 9 ist in Richtung zum Dorn hin ein weiterer Segerring 16 angeordnet, welcher als Gegenlager für die Dornhülsenfeder 18 dient. Die zweite Feder die Ventilringfeder 17 ist radial größer als die Dornhülsenfeder 18 ausgefertigt, so daß die Dornhülsenfeder 18 innerhalb der Ventilfeder 17 angeordnet ist. Die Ventilringfeder 17 schließt mit ihrem anderen Ende an den Ventilring 10 an und drückt den Ventilring 10 vom Gehäuseboden 23 weg nach außen aus dem Gehäuse heraus. Mit der in der Innenbohrung angeordneten Schrägfläche gegen die Schrägfläche der Dornhülse 9, welche über die starre Verbindung mit dem Segerring 15 und dem Gehäuseboden 23 den maximalen Weg des Ventilringes 10 nach außen hin begrenzt.

Die Abdichtung des Ventilringes 10 gegenüber dem Gehäuse 8 erfolgt durch den O-Ring 13 und einen Stützring 19 welcher in einem außen umlaufenden Einstich in der Mantelfläche des Ventilringes 10 angeordnet sind.

Die Dornhülsenfeder 18 ist dazu vorgesehen, daß im Notfall die Dornhülse 9, welche im Normalfall gegenüber der Oberfläche des Gehäuses 8 hervorsteht in das Gehäuse hinein eingeschoben werden kann ohne daß das Kupplungsteil 2 für den Werkstückträger Schaden erleidet. Dies kann zum Beispiel dann der Fall sein, wenn der Werkstückträger auf eine glatte ebene Fläche aufgelegt wird und so nach dem bisherigen Stand der Technik die gesamte Kraft, welche durch den Werkstückträger und die daran befestigten Elemente aufgebracht wird aufnehmen müsste. Nach der vorliegenden Erfindung besteht jedoch der Vorteil, daß durch die Dornhülsenfeder 8 die Dornhülse nun in das Gehäuse 8 hinein eingedrückt werden kann, wobei weiterhin die Dichtheit gewährleistet bleibt, ohne daß die Dornhülse oder das gesamte Kupplungsteil 2 für den Werkstückträger Schaden erleidet. Im weiteren sind noch die Befestigungslasche 33 und die Befestigungsschrauben 35 dargestellt.

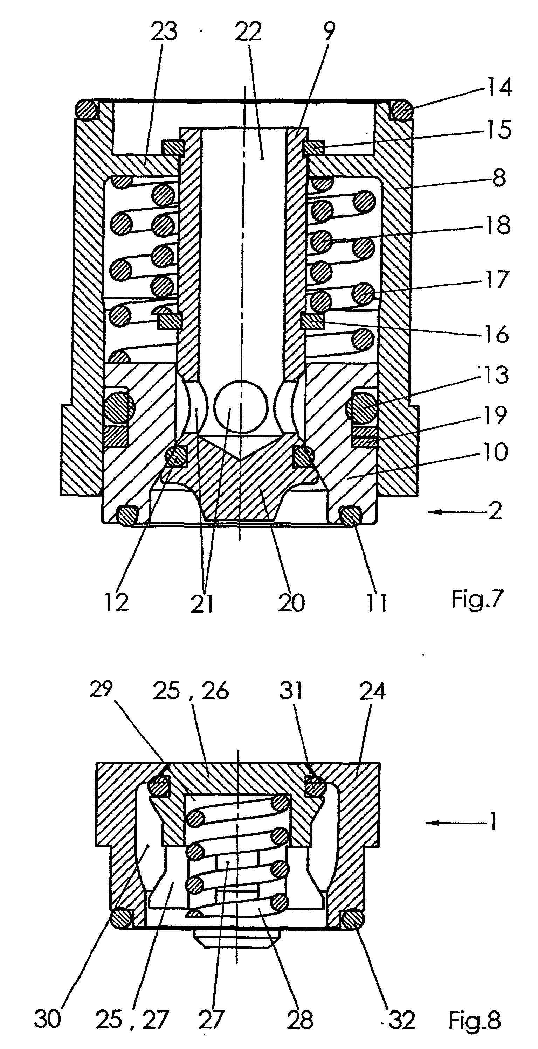

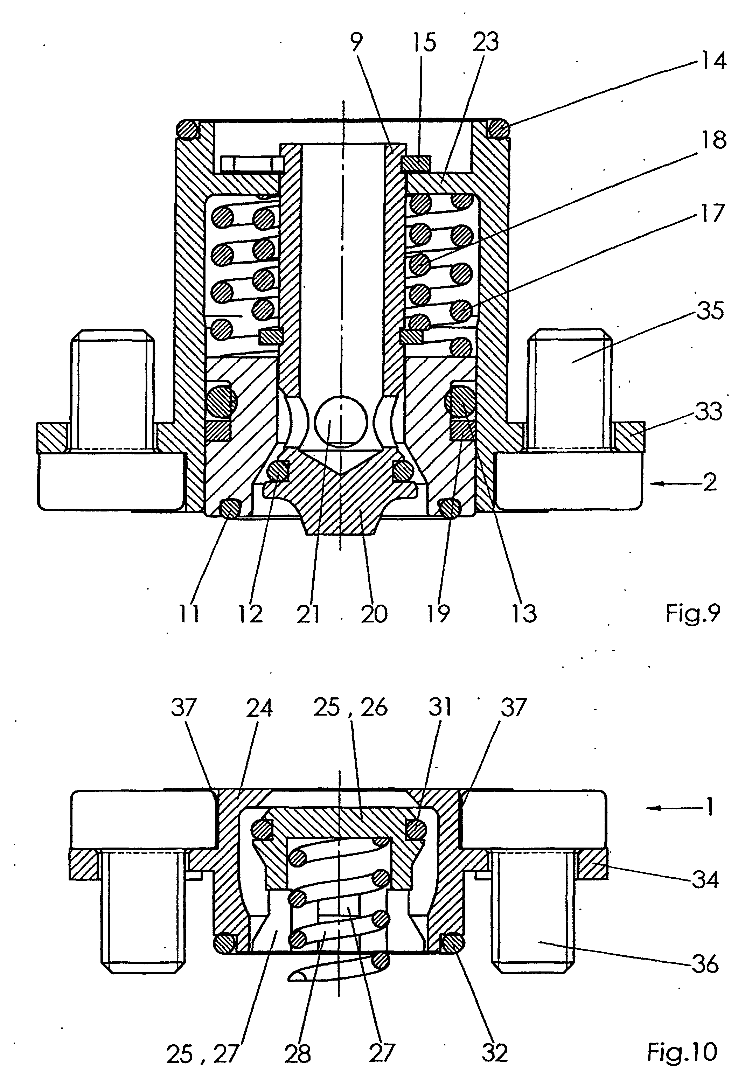

In den Figur 7 und 8 ist eine Schnittdarstellung gezeigt, die durch das erfindungsgemäße Kupplungssystem im Schnitt A-A' dargestellt. In dieser Darstellung sind die beiden Kupplungselemente das Kupplungsteil 1 für den Schnellspannzylinder in Figur 8 und das Kupplungsteil 2 für den Werkstückträger in Figur 7 in entlastetem Zustand dargestellt. In Figur 7 ist dabei erkennbar, daß der Ventilring 10 mit seinem stirnseitigem angeordneten O-Ring 11 am weitesten aus dem Gehäuse 8 des Kupplungsteiles 2 heraussteht. Die Dornhülse 9 mit der Stirnseite des Dornes 20 liegt innerhalb der Stirnfläche des Ventilringes 10 angeordnet. Dadurch ergibt sich beim Zusammenfügen der beiden Kupplungsteile 1 und 2 gegeneinander als erstes die Berührung des O-Ringes 11 mit der Stirnfläche des Gehäuses 24 des Kupplungsteiles 1 im Schnellspannzylinder, worauf nach weiterem Annähern der beiden Kupplunsteile 1 und 2 gegeneinander sich der O-Ring 11 verformt bis die beiden Stirnseiten des Ventilringes 10 und des Ventildornes 25 aufeinander aufliegen. Wenn nun die beiden Flächen aufeinander aufliegen und die beiden Kupplungsteile weiter gegeneinander geführt werden, so wird einerseits der Ventilring 10 gegen die Federkraft der Ventilringfeder 17 in das Gehäuse 8 des Kupplungsteils 2 eingedrückt und andererseits drückt die Dornhülse 9 mit der Stirnseite ihres Dornes 20 gegen die Stirnseite des Ventildornes 25 und gegen die Federkraft der Feder 28, welche deutlich schwächer ausgebildet ist als die Federkraft der Dornhülsenfeder 18, die als axiale Feder für die Dornhülse 9 zum einwärtsbewegen der Dornhülse 9 zum Schutz vor Beschädigung vorgesehen ist. In den Figuren 9 und 10 sind wiederum die beiden Kupplungsteile 1 und 2 für den Werkstückträger und den Schnellspannzylinder dargestellt, welche im Schnitt B-B' gezeigt sind.

In dieser Darstellung sind die beiden Ventile der Kupplungselemente in geöffneter Darstellung gezeigt. Im wesentlichen entspricht die Darstellung in den Figuren 9 und 10 Darstellung in Figur 6, wobei zum Unterschied zur Figur 6 die beiden Kupplungsteile 1 und 2 in getrennter Darstellung gezeigt sind. Im Unterschied zur Darstellung in Figur 6 ist in Darstellung in Figur 7 jedoch ein zusätzlicher Ausblasschlitz 37, welcher zwischen den Schrauben 36 und dem Gehäuse 24 des Kupplungsteiles des Schnellspannzylinder ausgebildet ist. Dieser Ausblasschlitz 37 verläuft ringsum das Gehäuse 24 zwischen dem Gehäuse und dem Deckel des Schnellspannzylinders sowie auch zwischen dem Gehäuse 24 und den Schrauben 36. Dadurch ergibt sich die Möglichkeit, durch einem unterhalb des Gehäuses 24 im Deckel des Schnellspannzylinder angeordneten Einstiches im Bereich der Oberfläche des Deckels des Schnellspannzylinders um das Gehäuse 24 herum auszublasen. Durch diesen Ausblasvorgang können vorhandene Verunreinigungen entfernt werden.

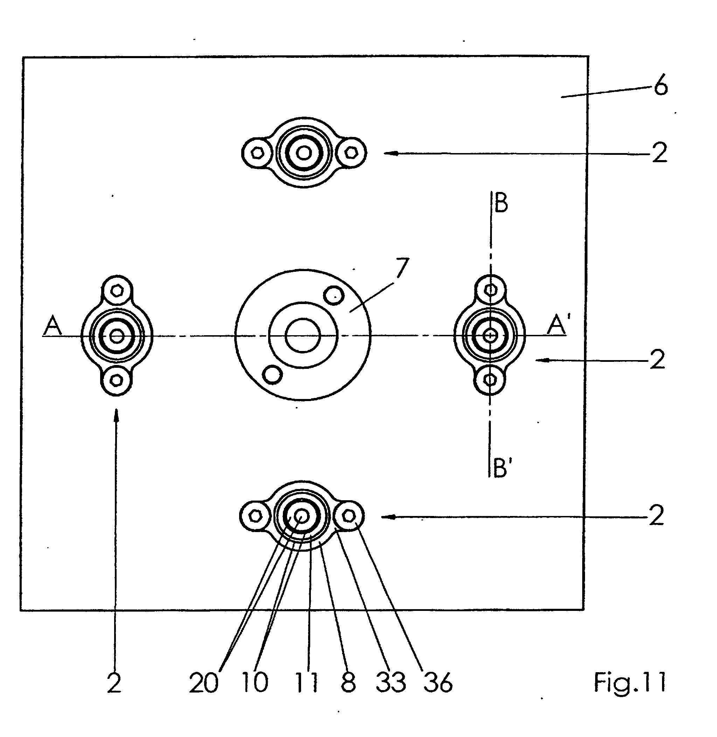

Die Figur 11 zeigt eine Unteransicht eines Werkstückträgers 6, welcher in der Mitte einen Einziehnippel 7 aufweist, um den herum an entsprechenden Positionen Kupplungsteile 2 für den Werkstückträger angeordnet sind. im äußeren Bereich dieses Kupplungsteiles 2 ist das Gehäuse 8 erkennbar, in welchem die Schrauben 36 für eine mögliche Form der Befestigung eines solchen Kupplungsteiles angeordnet sind. Radial innerhalb des Gehäuses 8 ist ein Teil der Stirnfläche des Ventilringes 10 erkennbar an welche der O-Ring 11 radial innerhalb anschließt, welcher in einem Einstich in der Stirnseite des Ventilringes eingelassen ist. An den O-Ring radial innerhalb anschließend ist der zweite Teil der Stirnfläche, welcher mit dem ersten Teil die innere und äußere Begrenzung des Einstiches in der Stirnfläche darstellen, erkennbar. Innerhalb des zweiten radial inneren Einstiches in der Stirnseite des Ventilringes ist der Dorn 20 der Dornhülse 9 erkennbar, wobei der an dem Ventilring angrenzende radiale äußere Bereich des Dornes wie in den Schnittdarstellungen erkennbar, gewölbt ausgebildet ist, und der innere, zentrale, radiale Bereich als plane Stirnfläche abschließt.

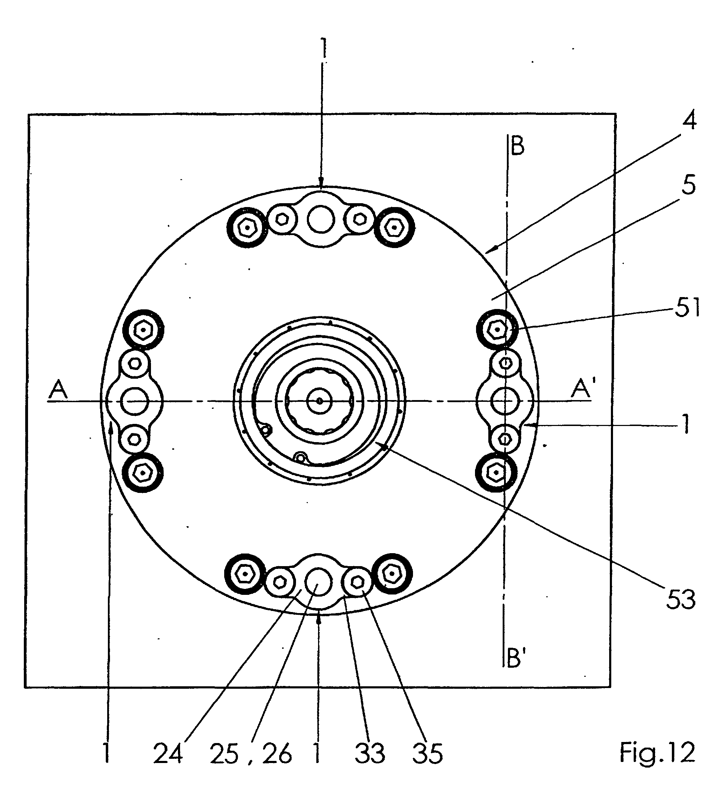

In Figur 12 ist das Gegenstück zu Figur 11 dargestellt, bei dem es sich um die Ansicht des Schnellspannzylinders 4 handelt, dessen innere, größere Kreisdarstellung den Deckel 5 des Schnellspannzylinders 4 darstellt. Innerhalb dieses Deckels sind die Kupplungsteile 1 des Schnellspannzylinders im Deckel eingelassen dargestellt. Ebenfalls erkennbar im Deckel 5 sind die Befestigungsschrauben 51 zur Befestigung des Schnellspannzylinderdeckels am Schnellspannzylinder dargestellt. Zentral in der Mitte des Schnellspannzylinderdeckels 5 ist die Nippelaufnahme 53 dargestellt, in welche der Einziehnippel eingeführt und zum Verspannen des Werkstückträgers verspannt wird. Das Kupplungsteil 1 für den Schnellspannzylinder weist eine ähnlich Kontur auf, wie das Kupplungsteil 2 für den Werkstückträger. An zwei Seiten des Kupplungsteiles 2 sind Laschen 33 angeordnet, in welche Befestigungsschrauben 35 eingeführt, um das Kupplungsteil 1 mit dem Deckel das Schnellspannzylinders zu verschrauben. Zentral in der Mitte des Gehäuses 24 des Kupplungsteiles 1 ist der Ventildorn 25 mit seinem Kopf 26 erkennbar. Die gesamte Anordnung ist plan mit der Oberfläche des Deckel 5 des Schnellspannzylinders 4 ausgebildet.

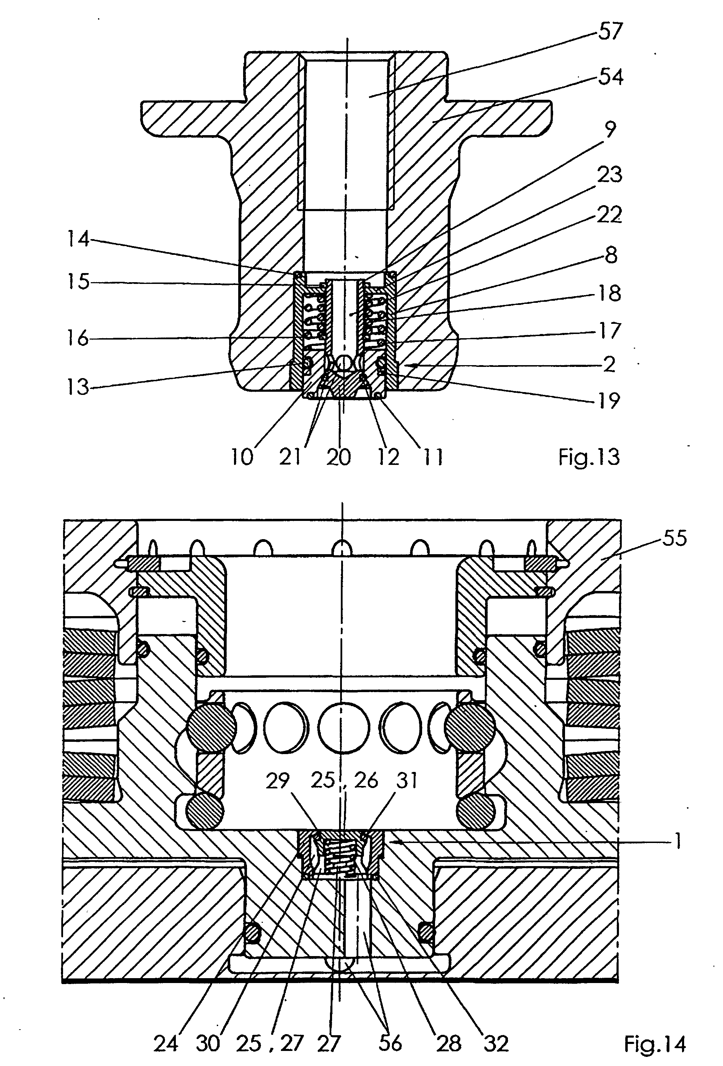

Die Figuren 13 und 14 zeigen eine weitere Ausführungsform der vorliegenden Erfindung, in welcher ein weiteres mögliches Kupplungssystem eine Durchführung zwischen dem Schnellspannzylinder und dem Einziehnippel ausbilden. In Figur 13 ist dabei der Einziehnippel dargestellt, in welchem ein erfindungsgemäßes Kupplungselement in der Form des Kupplungsteiles 2 eingearbeitet ist. Die Funktionen dieses Kupplungsteiles 2 sind im wesentlichen die selben wie in den bisher beschriebenen Ausführungsformen und die Abgangsbohrung 57 dient zur Weiterführung des durch das Kupplungsteil 1 im Schnellspannzylinder zugeführten Mediums. In Figur 14 ist ein Kupplungsteil 1 dargestellt, welches im Boden des Schnellspannzylinders 4 angeordnet ist und unterseitig einer Versorgungsbohrung 56 verbunden ist, welcher zur Zuführung eines betreffenden Mediums vorgesehen ist. Die Funktionsweise dieses Kupplungsteiles 1 ist im wesentlichen entsprechend mit den bereits beschriebenen Kupplungsteilen 1 aus den vorangehenden Ausführungsbeispielen. Der wesentliche Vorteil dieser Anordnung eines weiteren Kupplungssystemes zur Durchführung aller Art von Medien, besteht darin , daß eine zusätzliche weitere Durchführmöglichkeit in der Form eines Kupplungssystemes realisiert werden kann.

In einer weiteren Ausführungsform des Kupplungssystemes ist es vorgesehen, die bisher beschriebenen Kupplungsteile 1 und 2 dahingehend auszubilden, daß diese wenigstens zwei elektrische Kontakte aufweisen, welche eine sichere und zuverlässige Kontaktierung zur Übertragung elektrischer Signale oder Energie zwischen der Bearbeitungsmaschine und dem darauf aufgespannten Schnellspannzylinder und dem aufzuspannenden Werkstückträger ermöglicht.

In einer weiteren erfindungsgemäßen Ausführungsform des Kupplungssystemes ist es vorgesehen elektrische und/oder berührungslose Verbindungen zu realisieren. So werden z. B. induktive oder kapazitive Kontakte eingesetzt welche im Kupplungssystem zwischen dem Schnellspannzylinder und dem Werkstückträger angeordnet werden.

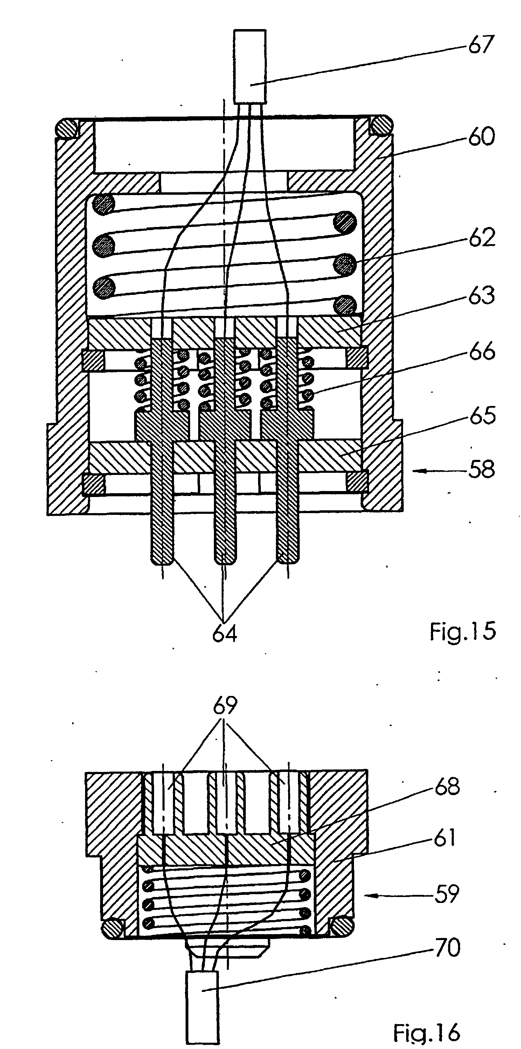

Die Figuren 15 und 16 zeigen eine Ausführungsform eines erfindungsgemäßen Kupplungssystemes, welche die Durchführung elektrischer Kontakte zwischen dem Schnellspannzylinder und dem Werkstückträger ermöglichen. In Figur 15 ist dabei das Kupplungsteil 58 für den Werkstückträger dargestellt und in Figur 16 das Kupplungsteil 59 für den Schnellspannzylinder. Das Kupplungsteil 58 besteht aus einem Gehäuse 60, in welchem eine oder mehrere Federn 62 eine elastische Kontaktierung einer Kontaktplatte zur Aufnahme der elektrischen Kontakte 64 beinhaltet. Die elektrischen Kontakte 64 sind durch eine Führungsplatte 65 geführt und selbstfedernd mit Federn 66 ausgebildet. Am hinteren Ende der elektrischen Kontakte 64 sind Leitungen 67 angeordnet, welche durch das Gehäuse hindurch in den Werkstückträger geführt wird. In der Darstellung in Figur 16 ist in einem Gehäuse 61 eine Kontaktplatte 68 angeordnet, welche ebenfalls federnd gelagert ist. In dieser Kontaktplatte 68 sind Kontakte 69 angeordnet, die zur Aufnahme der Kontakte 64 aus dem Kupplungsteil 58 dienen. Die von den Kontakten 69 abgehenden Leitungen 70 führen in den Schnellspannzylinder hinein und sind mit einer entsprechenden Versorgungsleitung verbunden. Äquivalent ist die Anordnung mit den berührungslosen Kontakten.

### Zeichnungslegende

- 1.: Kupplungsteil SSPZ (SSPZ = Schnellspannzylinder)
- 2.: Kupplungsteil WSTT (WSTT = Werkstückträger)
- 3.: Kupplungsteil Nippel
- 4.: Schnellspannzylinder
- 5.: Deckel SSPZ
- 6.: Werkstückträger
- 7.: Nippel
- 8.: Gehäuse
- 9.: Dornhülse
- 10.: Ventilring
- 11.: O-Ring
- 12.: O-Ring
- 13.: O-Ring
- 14.: O-Ring
- 15.: Segerring
- 16.: Ring
- 17..: Ventilringfeder
- 18.: Dornhülsenfeder
- 19.: Stützring
- 20.: Dorn
- 21.: Kreuzbohrung
- 22.: Axialbohrung
- 23.: Gehäuseboden
- 24.: Gehäuse
- 25.: Ventildorn
- 26.: Kopf
- 27.: Längsschlitz
- 28.: Feder
- 29.: Ventilbohrung
- 30.: Gehäusebohrung
- 31.: O-Ring
- 32.: O-Ring
- 33.: Befestigungslasche
- 34.: Befestigungslasche
- 35.: Befestigungsschraube
- 36.: Befestigungsschraube
- 37. 38. 39.: Ausblasschlitz
- 40.: Kreuzbohrung
- 41.: Zuführungsbohrung
- 42.: Kolbenboden.
- 43.: Kolbenfeder
- 44.: Kolben-O-Ring
- 45.: Einstich
- 46.: O-Ring
- 47.: O-Ring
- 48.: Öffnungsbohrung
- 49.: Anschlußbohrung
- 50.: Kolben
- 51.: Befestigungsschraube
- 52.: Zuführungsbohrung
- 53.: Nippelaufnahme
- 54.: Nippel
- 55.: Zylinder
- 56.: Versorgungsbohrung
- 57.: Abgangsbohrung
- 58.: Kupplungsteil WSTT
- 59.: Kupplungsteil SSPZ
- 60.: Gehäuse
- 61.: Gehäuse
- 62.: Federn
- 63.: Kontaktplatte
- 64.: elektrische Kontakte
- 65.: Führungsplatte
- 66.: Feder
- 67.: Leitungen
- 68.: Kontaktplatte
- 69.: Kontakte
- 70.: Leitungen

## Patentansprüche

1. Kupplungssystem für den Anschluß von Versorgungsleitungen für Medien aller Art zur Zuführung dieser Medien zwischen einer Werkzeugmaschine und einem daran angekoppelten Werkstückträger (6) in den Bearbeitungsbereich der Werkzeugmaschine, mit wenigstens einem maschinenseitigen Kupplungsteil (1) und wenigstens einem komplementären werkstückträgerseitigen Kupplungsteil (2), wobei die Kupplungsteile (1, 2) so angeordnet sind, daß die Kupplungsteile (1, 2) beim Ankoppeln des Werkstückträgers (6) mit ihren Stirnseiten aneinandergedrückt werden, **dadurch gekennzeichnet, daß** die bei nicht angekoppeltem Werkstückträger (6) nach außen hin abdichtend verschlossenen Kupplungsteile (1, 2) beim Ankoppeln des Werkstückträgers (6) sich nach außen hin abdichtend gegeneinander öffnen und eine durchleitende Verbindung herstellen und daß die Kupplungsteile (1, 2) beim Anheben des Werkstückträgers (6) sich zuerst nach innen hin abdichtend schließen und erst im Anschluß daran ihre Abdichtung nach außen hin auftrennen.

2. Kupplungssystem nach Anspruch 1, **dadurch gekennzeichnet, daß** das Kupplungsteil (1) aus einem Gehäuse (24) mit einer durchgängigen Öffnung besteht worin ein Ventildorn (25) federnd angeordnet ist

3. Kupplungssystem nach Anspruch 2, **dadurch gekennzeichnet, daß** die Öffnung im Gehäuse (24) des Kupplungsteiles (1) an die Stirnseite angrenzend eine sich nach innen hin erweiternde Schrägfläche aufweist.

4. Kupplungssystem nach Anspruch 3, **dadurch gekennzeichnet, daß** der Ventildorn (25) am Außenumfang eine sich stirnseitig hin verjüngende Schrägfläche mit eingearbeitetem 0-Ring aufweist.

5. Kupplungssystem nach einem der Ansprüche 2 bis 4, **dadurch gekennzeichnet, daß** der Ventildorn (25) auf der Rückseite seines Kopfes (26) eine Bohrung zur Aufnahme einer ersten Feder (28) aufweist, welche mittels Ausnehmungen in der Form von Längsschlitzen (27) in der Mantelfläche des Ventildornes (25) mit dem Innenraum des Gehäuses (24) verbunden ist.

6. Kupplungssystem nach einem der vorherigen Ansprüche, **dadurch gekennzeichnet, daß** das Kupplungsteil (2) aus einem Gehäuse (8) mit einer durchgängigen Öffnung besteht worin ein Ventilring (10) und eine Dornhülse (9) federnd angeordnet sind.

7. Kupplungssystem nach Anspruch 6, **dadurch gekennzeichnet, daß** der Ventilring (10) radial nach außen hin gegen die zylindrische Innenseite des Gehäuses gleitend und radial nach innen hin gegen die Dornhülse (9) mit einer Schrägfläche und einem 0-Ring abgedichtet ist.

8. Kupplungssystem nach Anspruch 6 oder 7, **dadurch gekennzeichnet, daß** der Ventilring (10) in der Bohrung des Gehäuses (8) geführt und mittels einer zweiten Feder (1 7) federnd angeordnet ist.

9. Kupplungssystem nach einem der Ansprüche 6 bis 8, **dadurch gekennzeichnet, daß** der Ventilring (10) im nichtbetätigtem Zustand gegenüber der Stirnseite des Gehäuses (8) des Kupplungsteiles (2) vorsteht

10. Kupplungssystem nach einem der Ansprüche 6 bis 9, **dadurch gekennzeichnet, daß** in der Stirnseite des Ventilringes (10) ein 0-Ring (11) angeordnet ist.

11. Kupplungssystem nach einem der Ansprüche 6 bis 10, **dadurch gekennzeichnet, daß** die Innenbohrung des Ventilringes (10) wenigstens abschnittsweise eine sich von außen nach innen hin verjüngende Schrägfläche aufweist, die in nichtbetätigtem Zustand gegen eine komplementäre Schrägfläche der Dornhülse (9) gepreßt ist.

12. Kupplungssystem nach einem der Ansprüche 6 bis 11, **dadurch gekennzeichnet, daß** die Dornhülse (9) die axiale Bewegung des Ventilringes (10) nach außen hin begrenzt.

13. Kupplungssystem nach einem der Ansprüche 6 bis 12, **dadurch gekennzeichnet, daß** die Dornhülse (9) mittels einer dritten Feder (18) federnd verschiebbar angeordnet ist.

14. Kupplungssystem nach Anspruch 13, **dadurch gekennzeichnet, daß** die Federkraft der dritten Feder (18) größer als die Federkraft der ersten Feder (28) ist, wodurch die Dornhülse (9) beim Kuppelvorgang den Ventildorn (25) in das Gehäuse (24) drückt, nachdem Stirnseite des Ventilringes (10) mit dem darin angeordneten 0-Ring (11) dichtend von der Stirnseite des Gehäuses (24) gegen die zweite Feder (17) gedrückt wird.

15. Kupplungssystem nach einem der Ansprüche 6 bis 14, **dadurch gekennzeichnet, daß** die Dornhülse (9) hinter dem Dorn (20) eine Axialbohrung (22) aufweist, in welche eine hinter dem Dorn (20) angeordnete Kreuzbohrung (21) mündet und so einen Durchlaß des Kupplungsteiles (2) für das betreffende Medium nach dem Trennen der beiden Schrägflächen des Ventilringes (10) und der Dornhülse (9) bewirkt.

16. Kupplungssystem nach einem der Ansprüche 6 bis 15, **dadurch gekennzeichnet, daß** die Dornhülse (9) den Ventilring (10) bei Beaufschlagung mit einer einwärtsgerichteten Kraft weiterhin dichtend in das Gehäuse drückt bis dieses vollkommen in Gehäuse (24) eingetaucht ist.

17. Kupplungssystem nach einem der vorherigen Ansprüche, **dadurch gekennzeichnet, daß** die beiden Kupplungsteile (58, 59) mit elektrischen Kontakten zur Durchführung elektrischer Verbindungen durch das Kupplungssystem ausgestattet sind.

18. Kupplungssystem nach einem der vorherigen Ansprüche, **dadurch gekennzeichnet, daß** die beiden Kupplungsteile (58, 59) mit berührungslosen Kontakten zur Durchführung induktiver Verbindungen durch das Kupplungssystem ausgestattet sind.

19. Kupplungssystem nach einem der vorherigen Ansprüche, **dadurch gekennzeichnet, daß** die beiden Kupplungsteile (58, 59) mit berührungslosen Kontakten zur Durchführung kapazitiver Verbindungen durch das Kupplungssystem ausgestattet sind.

20. Kupplungssystem nach einem der vorherigen Ansprüche, **dadurch gekennzeichnet, daß** wenigstens der maschinenseitiges Kupplungsteil (1) in einem Schnellspannzylinder (4) angeordnet ist, und daß zwischen dem Kupplungselement (1) im Schnellspannzylinder (4) und der Innenwand der für die Aufnahme vorgesehenen Bohrung ein Schlitz vorgesehen ist, welcher mit einem innenseitig im Schnellspannzylinderdeckel (5) vorgesehenen Einstich verbunden ist, welcher mit Druckluft beaufschlagt wird, um Verunreinigungen von innen nach außen hin auszublasen.

21. Kupplungssystem nach einem der vorherigen Ansprüche, **dadurch gekennzeichnet, daß** wenigstens der maschinenseitige Kupplungsteil (1) im Deckel (5) wenigstens eines Schnellspannzylinders (4) angeordnet ist.

22. Kupplungssystem nach einem der vorherigen Ansprüche, **dadurch gekennzeichnet, daß** wenigstens der maschinenseitige Kupplungsteil (1) im Kolben (50) wenigstens eines Schnellspannzylinders (4) angeordnet ist.

23. Kupplungssystem nach einem der vorherigen Ansprüche, **dadurch gekennzeichnet, daß** wenigstens der werkstückträgerseitige Kupplungsteil (2) in wenigstens einem Nippel (7) des Werkstückträgers (6) angeordnet ist.

## Claims

1. Coupler system for the connection of supply lines for media of any kind for supplying these media between a machine tool and a work-piece holder (6) coupled thereto into the processing zone of said machine tool, comprising at least one coupler element (1) on the machine side and at least one complementary coupler element (2) on the side of said work-piece holder, with said coupler elements (1, 2) being so disposed that the coupler elements (1, 2) are pressed against each other by their front sides when said work-piece holder (6) is coupled, **characterised in that** said coupler elements (1, 2), which are closed and seal to the outside when said work-piece holder (6) is not coupled, are opened to the outside with sealing action relative to each other when said work-piece holder (6) is coupled, thus establishing a continuous connection, and **in that** said coupler elements (1, 2) first close with sealing action towards the inside when said work-piece holder (6) is lifted and only then separate their sealing towards the outside.

2. Coupler system according to Claim 1, **characterised in that** said coupler element (1) consists of a housing (24) with a continuous opening in which a valve pin (25) is resiliently disposed.

3. Coupler system according to Claim 2, **characterised in that** said opening in said housing (24) of said coupler element (1) presents an inwardly flaring inclined surface adjacent to said front side.

4. Coupler system according to Claim 3, **characterised in that** said valve pin (25) presents an inclined surface with an O-ring recessed therein on the outer periphery, which surface tapers towards said front side.

5. Coupler system according to any of the Claims 2 to 4, **characterised in that** said valve pin (25) presents a bore on the rear side of its head (26) for receiving a first spring (28) that is connected by means of recesses in the form of longitudinal slots (27) in the lateral surface of said valve pin (25) to the interior space of said housing (24).

6. Coupler system according to any of the preceding Claims, **characterised in that** said coupler element (2) consists of a housing (8) with a continuous opening in which a valve ring (10) and a pin sleeve (9) are resiliently disposed.

7. Coupler system according to Claim 6, **characterised in that** said valve ring (10) is sealed for sliding against the cylindrical inner side of said housing in a radial direction to the outside and, in a radial direction to the inside, by an inclined surface and an O-ring against said pin sleeve (9).

8. Coupler system according to Claim 6 or 7, **characterised in that** said valve ring (10) is guided in said bore of said housing (8) and is resiliently disposed therein by means of a second spring (17).

9. Coupler system according to any of the Claims 6 to 9, **characterised in that** in the non-operative condition, said valve ring (10) projects relative to the front side of said housing (8) of said coupler element (2).

10. Coupler system according to any of the Claims 6 to 9, **characterised in that** an O-ring (11) is disposed in the front side of said valve ring (10).

11. Coupler system according to any of the Claims 6 to 10, **characterised in that** the inner bore of said valve ring (10) presents, at least in sections, an inclined surface tapering from the outside towards the inside, which, in the non-operative condition, is pressed against a complementary inclined surface of said pin sleeve (9).

12. Coupler system according to any of the Claims 6 to 11, **characterised in that** said pin sleeve (9) limits the axial movement of said valve ring (10) towards the outside.

13. Coupler system according to any of the Claims 6 to 12, **characterised in that** said pin sleeve (9) is disposed for resilient displacement by means of a third spring (18).

14. Coupler system according to Claim 13, **characterised in that** the spring force of said third spring (18) exceeds the spring force of said first spring (28), so that in the coupling operation said pin sleeve (9) presses said valve pin (25) into said housing (24) after the front side of said valve ring (10) with the O-ring (11) disposed therein is pressed with sealing action by the front side of said housing (24) against said second spring (17).

15. Coupler system according to any of the Claims 6 to 14, **characterised in that** said pin sleeve (9) presents an axial bore (22) behind said pin (20), into which bore opens a cross bore (21) disposed behind said pin (20), thus establishing a passage of said coupler element (2) for the respective medium after separation of said two inclined surfaces of said valve ring (10) and said pin sleeve (9).

16. Coupler system according to any of the Claims 6 to 15, **characterised in that** when said pin sleeve (9) is subjected to a force acting towards the inside it continues the sealing pressure on said valve ring (10) into said housing until said ring is completely inserted into said housing (24).

17. Coupler system according to any of the preceding Claims, **characterised in that** said two coupler elements (58, 59) are provided with electric contacts for establishing electric connections through the coupler system.

18. Coupler system according to any of the preceding Claims, **characterised in that** said two coupler elements (58, 59) are provided with non-contacting contacts for establishing inductive connections through the coupler system.

19. Coupler system according to any of the preceding Claims, **characterised in that** said two coupler elements (58, 59) are provided with non-contacting contacts for establishing capacitive connections through the coupler system.

20. Coupler system according to any of the preceding Claims, **characterised in that** at least said coupler element (1) on the machine side is disposed in a quick-action clamping cylinder (4) and that a slot is provided between said coupler element (1) in said quick-action clamping cylinder (4) and the inner wall of the bore provided for accommodation, which slot is connected to a recess provided on the inner side in the cover of said quick-action clamping cylinder (5), said recess being pressurised by compressed air for blowing out contaminants from the inside towards the outside.

21. Coupler system according to any of the preceding Claims, **characterised in that** at least said coupler element (1) on the machine side is disposed in the cover (5) of at least one quick-action clamping cylinder (4).

22. Coupler system according to any of the preceding Claims, **characterised in that** at least said coupler element (1) on the machine side is disposed in the piston (50) of at least one quick-action clamping cylinder (4).

23. Coupler system according to any of the preceding Claims, **characterised in that** at least said coupler element (2) on the side of said work-piece holder is disposed in at least one nipple (7) of said work-piece holder (6).

## Revendications

1. Système d'accouplement pour le raccord des conduits d'alimentation pour l'alimentation de milieux de tout genre afin de les passer entre une machine-outil et un porte-pièce (6) y raccordé dans la zone de traitement de ladite machine-outil, comprenant au moins un élément d'accouplement (1) du côté de la machine et au moins un élément d'accouplement (2) complémentaire du côté dudit porte-pièce, lesdits éléments d'accouplement (1, 2) étant disposés de façon, que les élément s d'accouplement (1, 2) soit pressés l'un contre l'autre par leur faces, quand ledit porte-pièce (6) est accouplé, **caractérisé en ce que** lesdits éléments d'accouplement (1, 2), qui sont fermés et étanchent vers l'extérieur, quand ledit porte-pièce (6) n'est pas accouplé, sont ouverts vers l'extérieur à effet d'étanchement l'un relativement à l'autre, quand ledit porte-pièce (6) est accouplé, en établissant ainsi un raccord continu, et **en ce que** lesdits élément s d'accouplement (1, 2) ferment d'abord, à effet d'étanchement, vers l'intérieur, quand ledit porte-pièce (6) est levé, et ne coupent leur étanchement vers l'extérieur qu'après leur fermeture.

2. Système d'accouplement selon la revendication 1, **caractérisé en ce que** ledit élément d'accouplement (1) est composé d'un boîtier (24) à ouverture continue, dans laquelle est disposé un goujon de soupape (25) de façon élastique.

3. Système d'accouplement selon la revendication 2, **caractérisé en ce que** ladite ouverture dans ledit boîtier (24) dudit élément d'accouplement (1) a une surface oblique évasée vers l'intérieur, adjacente à ladite face.

4. Système d'accouplement selon la revendication 3, **caractérisé en ce que** ledit goujon de soupape (25) présente une surface oblique à un anneau torique y noyé sur la périphérie extérieure, ladite surface s'étendant en cône vers ladite face.

5. Système d'accouplement selon une quelconque des revendications 2 à 4, **caractérisé en ce que** ledit goujon de soupape (25) a un alésage du côté arrière de sa tête (26) à recevoir un premier ressort (28) raccordé, moyennant des évidements sous forme de fentes longitudinales (27) dans l'enveloppe dudit goujon de soupape (25), à l'espace intérieur dudit boîtier (24).

6. Système d'accouplement selon une quelconque des revendications précédentes, **caractérisé en ce que** ledit élément d'accouplement (2) est composé d'un boîtier (8) à ouverture continue, dans laquelle sont disposés, de façon élastique, un anneau de soupape (10) et une douille de goujon (9).

7. Système d'accouplement selon la revendication 6, **caractérisé en ce que** ledit anneau de soupape (10) est rendu étanche pour un glissement contre la surface intérieur cylindrique dudit boîtier en un sens radial vers l'extérieur, et, en sens radial vers l'intérieur, par une surface oblique et un anneau torique contre ladite douille de goujon (9).

8. Système d'accouplement selon la revendication 6 or 7, **caractérisé en ce que** ledit anneau de soupape (10) est guidé dans ledit alésage dudit boîtier (8) et est y disposé, de façon élastique, moyennant un deuxième ressort (17).

9. Système d'accouplement selon une quelconque des revendications 6 à 9, **caractérisé en ce qu'**en étant non commandé, ledit anneau de soupape (10) fait saillie de la face dudit boîtier (8) dudit élément d'accouplement (2).

10. Système d'accouplement selon une quelconque des revendications 6 à 9, **caractérisé en ce qu'**un anneau torique (11) est disposé dans la face dudit anneau de soupape (10).

11. Système d'accouplement selon une quelconque des revendications 6 à 10, **caractérisé en ce que** l'alésage intérieur dudit anneau de soupape (10) comprend, au moins dans des segments, une surface oblique en cône à partir de l'extérieur vers l'intérieur, qui, en état non commandé, est pressée contre une surface oblique complémentaire de ladite douille de goujon (9).

12. Système d'accouplement selon une quelconque des revendications 6 à 11, **caractérisé en ce que** ladite douille de goujon (9) limite le mouvement axial dudit anneau de soupape (10) vers l'extérieur.

13. Système d'accouplement selon une quelconque des revendications 6 à 12, **caractérisé en ce que** ladite douille de goujon (9) est disposée de façon à être déplacée par un troisième ressort (18) de manière élastique.

14. Système d'accouplement selon la revendication 13, **caractérisé en ce que** l'élasticité dudit troisième ressort (18) surpasse l'élasticité dudit premier ressort (28), de façon qu'en fonction d'accouplement, ladite douille de goujon (9) presse ledit goujon de soupape (25) dans ledit boîtier (24) après que la surface avant dudit anneau de soupape (10) avec l'anneau torique (11) y disposé était pressé, à effet d'étanchement, par la face dudit boîtier (24) contre ledit deuxième ressort (17).

15. Système d'accouplement selon une quelconque des revendications 6 à 14, **caractérisé en ce que** ladite douille de goujon (9) présente un alésage axial (22) en arrière dudit goujon (20), dans lequel s'ouvre un alésage croisé (21) disposé en arrière dudit goujon (20), en établissant ainsi un passage dudit élément d'accouplement (2) pour le milieu respectif suivant la séparation desdites deux surfaces obliques dudit anneau de soupape (10) et de ladite douille de goujon (9).

16. Système d'accouplement selon une quelconque des revendications 6 à 15, **caractérisé en ce que**, quand ladite douille de goujon (9) est exposée à une force qui agit vers l'intérieur, la douille continue la pression d'étanchement sur ledit anneau de soupape (10) dans ledit boîtier, jusqu'à ce que ledit anneau soit complètement introduit dans ledit boîtier (24).

17. Système d'accouplement selon une quelconque des revendications précédentes, **caractérisé en ce que** lesdits deux éléments d'accouplement (58, 59) sont muni des contacts électriques afin d'établir des connexions électrique à travers le système d'accouplement.

18. Système d'accouplement selon une quelconque des revendications précédentes, **caractérisé en ce que** lesdits deux éléments d'accouplement (58, 59) sont muni des contacts non contigus afin d'établir des connexions inductives à travers le système d'accouplement.

19. Système d'accouplement selon une quelconque des revendications précédentes, **caractérisé en ce que** lesdits deux éléments d'accouplement (58, 59) sont muni des contacts non contigus afin d'établir des connexions capacitives à travers le système d'accouplement.

20. Système d'accouplement selon une quelconque des revendications précédentes, **caractérisé en ce qu'**au moins ledit élément d'accouplement (1) du côté de la machine est disposé dans un cylindre à serrage rapide (4), et **en ce qu'**une fente est formée entre ledit élément d'accouplement (1) dans ledit cylindre à serrage rapide (4) et la paroi intérieure de l'alésage formé pour la réception, cette fente étant reliée à un évidement formé du côté intérieur dans le couvercle dudit cylindre à serrage rapide (5), et ledit évidement étant mis sous pression par de l'air comprimé afin de purger des impuretés de l'intérieur vers l'extérieur.

21. Système d'accouplement selon une quelconque des revendications précédentes, **caractérisé en ce qu'**au moins ledit élément d'accouplement (1) du côté de la machine est disposé dans le couvercle (5) d'au moins un cylindre à serrage rapide (4).

22. Système d'accouplement selon une quelconque des revendications précédentes, **caractérisé en ce qu'**au moins ledit élément d'accouplement (1) du côté de la machine est disposé dans le piston (50) d'au moins un cylindre à serrage rapide (4).

23. Système d'accouplement selon une quelconque des revendications précédentes, **caractérisé en ce qu'**au moins ledit élément d'accouplement (2) du côté dudit porte-pièce est disposé dans au moins un raccord (7) dudit porte-pièce (6).
